# EUROPEAN PATENT APPLICATION

(11) **EP 2 234 036 A1**
(43) Date of publication of application: **29.09.2010**
(21) Application number: 08864735.9
(22) Date of filing: 22.12.2008
(51) Int. Cl.: G06K 17/00, G11B 5/09, G11B 5/10, G11B 20/10

(54) **MAGNETIC HEAD**

(30) Priority: 26.12.2007 JP 2007334490
(71) Applicant: CIS Electronica Industria e Comercio Ltda, CEP 04371-000 Sao Paulo, SP (BR)
(72) Inventor: ISUYAMA, Yasuo, 04371-000 Sao Paulo, SP (BR)
(74) Representative: Johnstone, Douglas Ian
(86) International application number: PCT/JP2008/073285
(87) International publication number: WO 2009/081896

(57) **Abstract**

[PROBLEMS] To provide a magnetic head provided with a microprocessor capable of storing a firmware downloaded from an external server. [MEANS FOR SOLVING PROBLEMS] The magnetic head has a core which is provided with a coil for converting data stored in a magnetic card to analog signals, an A/D conversion chip which is connected to the core to convert the analog signals to digital signals, and the microprocessor which is connected to the A/D conversion chip. The processor has a firmware storage means. When the firmware which controls its arithmetic/storage functions and controls an external hardware is downloaded from the external server (11) to the magnetic head, the firmware storage means stores the firmware.

## Description

### Technical Field

The present invention relates to a magnetic head that reads various data from a magnetic card.

### Background Art

There exists a magnetic card reading system which is formed of a magnetic head and a host computer connected to the magnetic head (see Patent Document 1). The magnetic head is formed of a head main body that reads data stored in a magnetic card; and a control unit that converts an analog signal read by the head main body to a digital signal and encrypts the digital signal using a symmetric key encryption scheme or asymmetric key encryption scheme. The head main body and the control unit are contained in a head container. The control unit of the magnetic head encrypts a digital signal using a key which is stored in a storage area thereof, and sends the encrypted digital signal to the host computer. A control unit of the host computer decrypts the encrypted digital signal using a key which is stored therein.

In this system, when the control unit of the magnetic head sends an encrypted digital signal to the control unit of the host computer, the control unit of the host computer instructs the control unit of the magnetic head to change the key. A procedure for changing a key in the system is as follows. When the control unit of the host computer decrypts a digital signal received from the magnetic head, the control unit of the host computer newly generates a key and sends the generated key to the control unit of the magnetic head. The control unit of the magnetic head changes an existing key stored in the storage area to the newly sent key. In addition, when an operator inputs an instruction to change a function and a new function through a keyboard, the control unit of the host computer sends the function change instruction and the new function to the control unit of the magnetic head. The control unit of the magnetic head changes an existing function to the newly sent function.
Patent Document 1: Japanese Patent Application Laid-Open No. 2001-143213

### Disclosure of the Invention

### Problems to be Solved by the Invention

In the control unit of the magnetic head in the magnetic card reading system disclosed in the above-described publication, even if firmware that controls the computation and storage functions of the control unit and external hardware is downloaded to the magnetic head from an external server after the magnetic head is shipped to the market or after the magnetic head is installed in a magnetic card reader, since the firmware is not to be stored in the storage area, various firmware to be downloaded cannot be stored in the control unit. In addition, even if upgraded firmware is downloaded from the external server, the control unit of the magnetic head does not store the post-upgrade version of firmware in the storage area and thus cannot support firmware upgrades. Accordingly, when the format of a magnetic card is changed, the control unit of the magnetic head may not be able to read data in the magnetic card, in which case the magnetic head itself needs to be changed along with the change in format.

An object of the present invention is to provide a magnetic head including a digital IC capable of storing firmware downloaded from an external server. Another object of the present invention is to provide a magnetic head including a digital IC capable of storing a post-upgrade version of firmware which is downloaded from an external server.

### Means for Solving the Problems

A premise of the present invention to solve the above-described problems is a magnetic head that reads various data from a magnetic card having the data stored therein by using a magnetic material.

On the premise of the present invention, the magnetic head includes: a core having a coil that converts data stored in the magnetic card to an analog signal; an A/D conversion chip that is connected to the core and converts the analog signal to a digital signal; and a digital IC connected to the A/D conversion chip. The digital IC has firmware storage means for storing firmware when the firmware is downloaded to the magnetic head from an external server, the firmware controlling computation and storage functions of the digital IC and controlling external hardware.

As an example of the present invention, the firmware includes data reading control that allows the digital IC to read various data in the magnetic card, supporting various formats of the magnetic card, and the digital IC has format-support reading means for reading various data from the magnetic card, supporting various formats of the magnetic card.

As another example of the present invention, the firmware includes data encryption control that allows the digital IC to encrypt the digital signal based on a predetermined encryption algorithm, and the digital IC has data encryption means for encrypting the digital signal based on a predetermined encryption algorithm.

As still another example of the present invention, the digital IC has firmware update means for rewriting, when upgraded firmware is downloaded to the magnetic head from the external server, a pre-upgrade version of firmware to the post-upgrade version of firmware.

As yet another example of the present invention, the external server encrypts the firmware using a key stored therein and downloads the encrypted firmware to the magnetic head, and the digital IC decrypts the encrypted firmware using a key stored therein and stores the decrypted firmware.

As another example of the present invention, after the digital IC and the external server perform mutual authentication, where authentication is performed therebetween, and determine that results of mutual authentication obtained by the mutual authentication are valid, the external server downloads the firmware to the magnetic head, and the digital IC stores the firmware downloaded from the external server.

As still another example of the present invention, the digital IC has algorithm storage means for storing, when various encryption algorithms that encrypt the digital signal are downloaded to the magnetic head from the external server, the encryption algorithms.

As yet another example of the present invention, the digital IC has algorithm update means for rewriting, when a new encryption algorithm is downloaded to the magnetic head from the external server, an already stored encryption algorithm to the new encryption algorithm.

As another example of the present invention, the external server encrypts the encryption algorithm using a key stored therein and downloads the encrypted encryption algorithm to the magnetic head, and the digital IC decrypts the encrypted encryption algorithm using a key stored therein and stores the decrypted encryption algorithm.

As still another example of the present invention, after the digital IC and the external server perform mutual authentication, where authentication is performed therebetween, and determine that results of mutual authentication obtained by the mutual authentication are valid, the external server downloads the encryption algorithm to the magnetic head, and the digital IC stores the encryption algorithm downloaded from the external server.

As yet another example of the present invention, the magnetic head has a housing that covers an outer surface thereof, and the core, the A/D conversion chip, and the digital IC are contained in the housing.

As another example of the present invention, the A/D conversion chip and the digital IC are fixed in the housing with a solid material filled in the housing.

### Effect of the Invention

According to the magnetic head of the present invention, when firmware that controls the computation and storage functions of the digital IC and controls external hardware is downloaded to the magnetic head from an external server, the digital IC stores the firmware. Thus, firmware that is downloaded from the external server after the magnetic head is shipped to the market or after the magnetic head is installed in a magnetic card reader can be stored in the digital IC at any time. The magnetic head can support various firmware even after the shipment or installation thereof and can perform, using such firmware, optimal control of the computation and storage functions of the digital IC and the external hardware according to the operating environment of the magnetic head.

In the magnetic head in which data reading control that allows the digital IC to read various data in the magnetic card, supporting various formats of the magnetic card, is included in firmware and the digital IC reads various data from the magnetic card, supporting various formats of the magnetic card, when data reading control that reads data from the magnetic card, supporting the format of the magnetic card is downloaded to the digital IC from the external server, the digital IC stores the data reading control. Thus, data reading control which is downloaded from the external server after the magnetic head is shipped to the market or after the magnetic head is installed in a magnetic card reader can be stored in the digital IC at any time. The magnetic head can support various formats of the magnetic card even after the shipment or installation thereof. Thus, the magnetic head can adapt to various specifications of the magnetic card and can reliably read data stored in the card. The magnetic head does not need to be changed along with a change in the format of the magnetic card, and thus, the same magnetic head can be used continuously.

In the magnetic head in which data encryption control that allows the digital IC to encrypt a digital signal based on a predetermined encryption algorithm is included in firmware, and the digital IC encrypts a digital signal based on a predetermined encryption algorithm, the digital IC encrypts various data (digital signals) read from the magnetic card. Thus, even if data is stolen by a third party, the data cannot be used unless the stolen data is decrypted, and accordingly, unauthorized copying of the magnetic card by a third party can be prevented. Note that there is a case in Internet banking in which a third party who has stolen data in a magnetic card performs a so-called "spoofing" attack, where the third party creates a fake website on a website of a bank or a credit card company, and performs unauthorized transactions at the bank or the credit card company. However, in the magnetic head, since a third party cannot steal data in a magnetic card, the third party cannot create a fake website, enabling to prevent "spoofing" by a third party.

The magnetic head in which the digital IC rewrites a pre-upgrade version of firmware to a post-upgrade version of firmware can immediately support a post-upgrade version of firmware even if an upgrade of firmware is performed after the magnetic head is shipped to the market or after the magnetic head is installed in a magnetic card reader. Even if firmware is changed along with a change in the format of a magnetic card, the magnetic head can store the changed firmware and thus can support various changed formats of the magnetic card. Accordingly, the magnetic head can adapt to various specifications of the magnetic card and can reliably read data stored in the card.

In the magnetic head in which the external server encrypts firmware using a key stored therein and the digital IC decrypts the encrypted firmware using a key stored therein and stores the decrypted firmware, firmware is downloaded to the magnetic head with the firmware being encrypted. Thus, even if firmware is stolen by a third party, the firmware cannot be used unless the stolen firmware is decrypted, and accordingly, unauthorized use of a magnetic card by a third party by firmware tampering can be prevented.

In the magnetic head in which, after the digital IC and the external server perform mutual authentication, where authentication is performed therebetween, and determine that results of mutual authentication obtained by the mutual authentication are valid, the external server downloads firmware to the magnetic head, and the digital IC stores the firmware downloaded from the external server, the digital IC and the external server can determine mutual validity by performing mutual authentication. Thus, even when a fake server is connected to the magnetic head or when a fake magnetic head is connected to the external server, such a fake can be detected. In the magnetic head, a third party cannot access the magnetic head using a fake server and thus unauthorized use of a magnetic card by a third party by firmware tampering can be prevented.

The magnetic head in which, when an encryption algorithm is downloaded from the external server, the digital IC stores the encryption algorithm, can store various encryption algorithms in the digital IC at any time after the magnetic head is shipped to the market or after the magnetic head is installed in a magnetic card reader, and can encrypt data (digital signal) in a magnetic card using various encryption algorithms. In the magnetic head, the digital IC encrypts data in a magnetic card using various encryption algorithms. Thus, even if data is stolen by a third party, the data cannot be used unless the stolen data is decrypted. Accordingly, unauthorized acquisition of data in a magnetic card by a third party can be reliably prevented, enabling to reliably prevent unauthorized copying of the magnetic card by a third party or "spoofing" by a third party.

In the magnetic head in which, when a new encryption algorithm is downloaded from the external server, the digital IC rewrites an already stored encryption algorithm to the new encryption algorithm, even if an encryption algorithm stored in the digital IC is analyzed and thus a change of the algorithm is required after the magnetic head is shipped to the market or after the magnetic head is installed in a magnetic card reader, a change of an encryption algorithm can be handled immediately and thus data can be encrypted based on a changed encryption algorithm. In the magnetic head, the digital IC encrypts data (digital signal) in a magnetic card using a new encryption algorithm. Thus, even if data is stolen by a third party, the data cannot be used unless the stolen data is decrypted. Accordingly, unauthorized acquisition of data in a magnetic card by a third party can be reliably prevented, enabling to reliably prevent unauthorized copying of the magnetic card by a third party or "spoofing" by a third party.

In the magnetic head in which the external server encrypts an encryption algorithm using a key stored therein and the digital IC decrypts the encrypted encryption algorithm using a key stored therein and stores the decrypted encryption algorithm, an encryption algorithm is downloaded to the magnetic head with the encryption algorithm being encrypted. Thus, even if an encryption algorithm is stolen by a third party, data cannot be decrypted using the encryption algorithm unless the stolen encryption algorithm is decrypted. The magnetic head can reliably prevent unauthorized acquisition of data in a magnetic card by a third party and thus can reliably prevent unauthorized copying of the magnetic card by a third party or "spoofing" by a third party.

In the magnetic head in which, after the digital IC and the external server perform mutual authentication, where authentication is performed therebetween, and determine that results of mutual authentication obtained by the mutual authentication are valid, the external server downloads an encryption algorithm to the magnetic head, and the digital IC stores the encryption algorithm downloaded from the external server, the digital IC and the external server can determine mutual validity by performing mutual authentication. Thus, even if a fake magnetic head is connected to the external server, the fake magnetic head cannot access the external server and thus an encryption algorithm is not downloaded to the fake magnetic head from the external server. The magnetic head does not allow a third party to decrypt data in a magnetic card using an encryption algorithm and thus can reliably prevent unauthorized acquisition of data in the magnetic card by a third party, enabling to reliably prevent unauthorized copying of the magnetic card by a third party or "spoofing" by a third party.

In the magnetic head in which the core, the A/D conversion chip, and the digital IC are contained in a housing, data converted to an analog signal or a digital signal cannot be stolen unless the magnetic head itself is disassembled. Thus, the magnetic head can reliably prevent stealing of data stored in a magnetic card and thus can reliably prevent unauthorized copying of the magnetic card by a third party or "spoofing" by a third party.

In the magnetic head in which the A/D conversion chip and the digital IC are fixed in the housing with a synthetic resin, when the magnetic head is disassembled, the synthetic resin needs to be removed. Upon removal of the synthetic resin, the A/D conversion chip and the digital IC are destroyed, enabling to prevent a data-stealing device from being mounted on the A/D conversion chip and the digital IC. The magnetic head can reliably prevent unauthorized acquisition of data in a magnetic card by a third party and thus can reliably prevent unauthorized copying of the magnetic card by a third party or "spoofing" by a third party.

### Brief Description of the Drawings

FIG. 1 is a hardware configuration diagram of a magnetic card reading system which is shown as an example of the use of a magnetic head.
FIG. 2 is a schematic diagram of an internal structure of a magnetic card reader shown as an example.
FIG. 3 is a partially cutaway perspective view of the magnetic head shown by cutting away a part of a housing.
FIG. 4 is a configuration diagram of a microprocessor (processor) shown as an example.
FIG. 5 is a block diagram showing an example of a process performed between an external server and the magnetic head.
FIG. 6 is a ladder diagram showing an example of external authentication.
FIG. 7 is a ladder diagram showing an example of internal authentication.
FIG. 8 is a ladder diagram showing an example of a download process performed between the external server and the microprocessor.
FIG. 9 is a diagram for describing an example of generation of keys used for encryption and decryption.
FIG. 10 is a diagram for describing an example of generation of keys used for encryption and decryption.
FIG. 11 is a diagram for describing an example of generation of keys used for encryption and decryption.
FIG. 12 is a diagram for describing an example of generation of keys used for encryption and decryption.
FIG. 13 is a diagram for describing an example of generation of keys used for encryption and decryption.
FIG. 14 is a diagram for describing an example of generation of keys used for encryption and decryption.
FIG. 15 is a block diagram showing an example of a process performed between the magnetic head and a host computer.
FIG. 16 is a ladder diagram showing an example of external authentication.
FIG. 17 is a ladder diagram showing an example of internal authentication.
FIG. 18 is a ladder diagram showing an example of a main process in the system.
FIG. 19 is a diagram for describing another example of generation of keys used for encryption and decryption.
FIG. 20 is a diagram for describing another example of generation of keys used for encryption and decryption.
FIG. 21 is a diagram for describing another example of generation of keys used for encryption and decryption.
FIG. 22 is a diagram for describing another example of generation of keys used for encryption and decryption.
FIG. 23 is a diagram for describing another example of generation of keys used for encryption and decryption.
FIG. 24 is a diagram for describing another example of generation of keys used for encryption and decryption.

### Description of Reference Numerals

- 10:: MAGNETIC CARD READING SYSTEM
- 11:: EXTERNAL SERVER
- 12:: MAGNETIC CARD READER
- 13:: HOST COMPUTER
- 19:: MAGNETIC HEAD
- 23:: HOUSING
- 24:: CORE
- 25:: A/D CONVERSION CHIP
- 26:: MICROPROCESSOR (DIGITAL IC)
- 35:: CENTRAL PROCESSING UNIT
- 36:: MEMORY

### Best Mode for Carrying Out the Invention

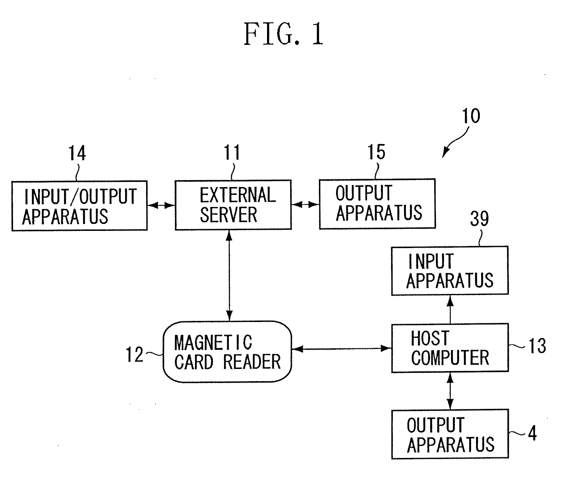

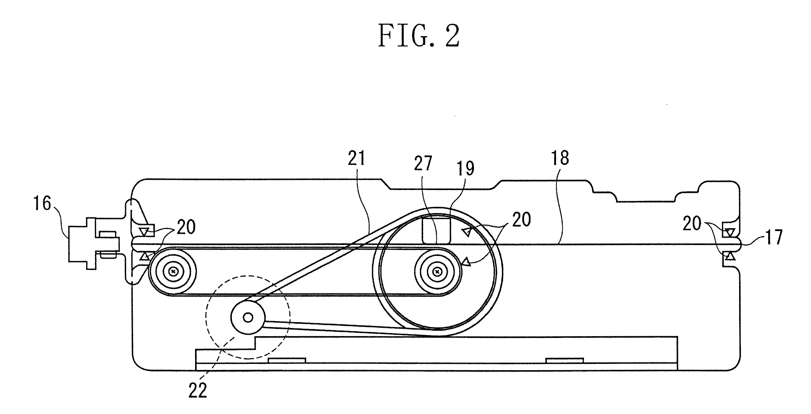

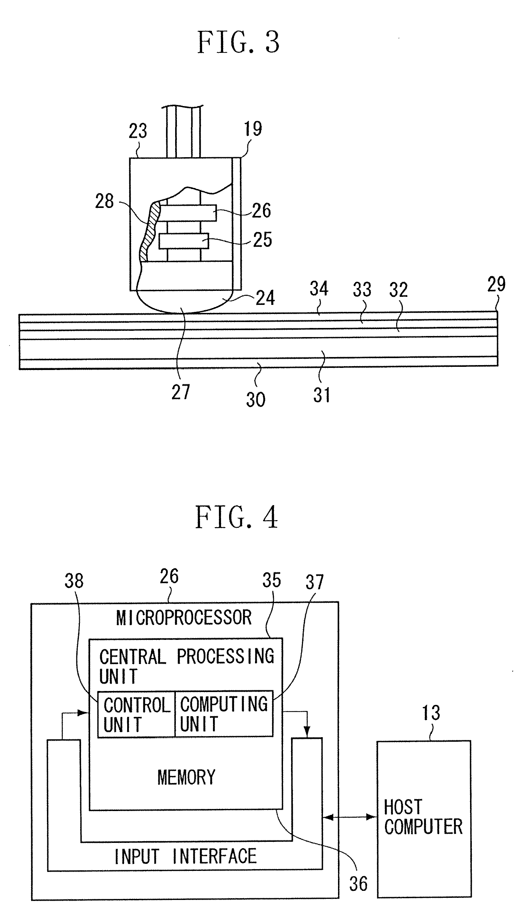

A detailed description of a magnetic head according to the present invention with reference to the accompanying drawings is as follows. FIG. 1 is a hardware configuration diagram of a magnetic card reading system 10 which is shown as an example of the use of a magnetic head 19, and FIG. 2 is a schematic diagram of an internal structure of a magnetic card reader 12 shown as an example. FIG. 3 is a partially cutaway perspective view of the magnetic head 19 shown by cutting away a part of a housing 23, and FIG. 4 is a configuration diagram of a microprocessor 26 (digital IC) shown as an example. In FIG. 3, a state in which an end portion 27 of a core 24 is in contact with a surface of a magnetic card 29 is shown, and a graphical representation of a synthetic resin 28 (solid material) filled in the housing 23 is partially omitted.

The magnetic card reading system 10 is formed of an external server 11; a magnetic card reader 12 that reads card data (various data) stored in a magnetic card 29; and a host computer 13. In the system 10, the server 11 and the card reader 12 are connected to each other via an interface (wired or wireless), and the card reader 12 and the computer 13 are connected to each other via an interface (wired or wireless). The card data includes a card number, a PIN, a user ID, a password, personal information of a card holder (a postal code, an address or the place of residence, a name or designation, date of birth, a family structure, annual income, a company he/she works for, a phone number, a facsimile number, an e-mail address, a URL, etc.), corporate information of the card holder (a postal code, an address, a name, date of establishment, various management information, client information, a phone number, a facsimile number, an email address, a URL, etc.), business transaction content, etc.

The external server 11 is a computer having a central processing unit (CPU or MPU) and a memory (large capacity hard disk), and has a DNS server function. The memory stores a URL of the card reader 12. The central processing unit of the server 11 is formed of a computing unit and a control unit. An input apparatus 14, such as a keyboard and a mouse, and an output apparatus 15, such as a display and a printer, are connected to the server 11 via an interface. The central processing unit of the server 11 starts an application stored in the memory, based on control of an operating system and executes the following means according to the started application.

The central processing unit of the external server 11 executes a firmware encryption means for encrypting predetermined firmware using keys stored in the memory, and executes an algorithm encryption means for encrypting a predetermined encryption algorithm using keys stored in the memory. The central processing unit of the server 11 executes an access means for accessing, via the Internet, a controller of the card reader 12 which will be described later, and executes a mutual authentication means for mutually performing authentication with the magnetic head 19.

The central processing unit of the external server 11 executes a first firmware download means for downloading unencrypted firmware or encrypted firmware to the magnetic head 19, and executes a second firmware download means for downloading new unencrypted firmware (upgraded firmware) or new encrypted firmware (upgraded firmware) to the magnetic head 19. The central processing unit of the server 11 executes a first algorithm download means for downloading an unencrypted encryption algorithm or an encrypted encryption algorithm to the magnetic head 19, and executes a second algorithm download means for downloading a new unencrypted encryption algorithm or a new encrypted encryption algorithm to the magnetic head 19.

Firmware is an application that controls the computation and storage functions of the microprocessor 26 of the magnetic head 19 which will be described later, and controls external hardware connected to the processor 26. Firmware includes data reading control that allows the processor 26 of the magnetic head 19 to read various data in the card 29, supporting various formats of the magnetic card 29. Firmware further includes data encryption control that allows the processor 26 of the magnetic head 19 to encrypt card data (digital signal) based on a predetermined encryption algorithm. Firmware can perform, by using it, optimal control of the computation and storage functions of the processor 26 according to the operating environment of the magnetic head 19, and optimal control of the external hardware connected to the processor 26.

The magnetic card reader 12 is of an insertion motor-driven type and includes a controller (not shown). As shown in FIG. 2, the card reader 12 has a card insertion opening 16 formed at a front end thereof; a card ejection opening 17 formed at a rear end thereof; and a card guide rail 18 which connects from the card insertion opening 16 to the card ejection opening 17. The magnetic head 19 is mounted on the center of the card reader 12. Optical sensors 20 for detecting a position of the magnetic card 29 moving on the guide rail 18 are mounted near the insertion opening 16, the ejection opening 17, and the magnetic head 19.

When the card 29 is inserted through the insertion opening 16, the card 29 automatically moves on the guide rail 18 and is ejected through the ejection opening 17.
The card 29 on the guide rail 18 is moved by a belt 21 mounted in the card reader 12. The belt 21 is driven by a motor 22 installed in the card reader 12. The magnetic head 19, the sensors 20, and the motor 22 are connected to the controller of the card reader 12.

The controller of the card reader 12 is a computer having a central processing unit (CPU or MPU) and a memory (large capacity flash memory). The memory stores a URL of the external server 11. The central processing unit of the controller is formed of a computing unit and a control unit. The controller is connected to a DNS server (not shown) and the host computer 13. The controller can access the external server 11 via the Internet. The controller drives or stops the motor 22 by turning on/off a switch, and outputs an instruction to start reading card data or an instruction to stop reading card data to the magnetic head 19.

The magnetic head 19 converts card data stored on a magnetic layer 32 of the magnetic card 29 to an electrical signal. As shown in FIG. 3, the magnetic head 19 is formed of a housing 23 that covers an outer surface thereof; a core 24 having mounted thereon a coil (not shown) that converts card data stored in the magnetic card to an analog signal (electrical signal); an A/D conversion chip 25 that converts the analog signal to a digital signal (electrical signal); and a microprocessor 26 (MPU). In the magnetic head 19 installed in the card reader 12, the end portion 27 of the core 24 forming the magnetic head 19 faces the guide rail 18. The A/D conversion chip 25 is electrically connected to the core 24. The processor 26 is electrically connected to the A/D conversion chip 25, and is connected to the host computer 13 via an interface.

The core 24, the A/D conversion chip 25, and the microprocessor 26 are contained in the housing 23. Note, however, that the end portion 27 of the core 24 is exposed outside from a lower end of the housing 23. The entire A/D conversion chip 25 and the entire processor 26 are covered with a synthetic resin 28 (solid material) filled in the housing 23, and are fixed inside the housing 23 through the synthetic resin 28. Although it is preferred to use a thermosetting synthetic resin for the synthetic resin 28, in addition to a thermosetting synthetic resin, a thermoplastic synthetic resin can also be used. In addition to organic compounds such as synthetic resins, inorganic compounds such as ceramic (solid materials) with high resistance to chemical solvents can also be used. In the magnetic card 29, a color printed layer 30, a base layer 31, a magnetic layer 32, a shielding layer 33, and a print layer 34 are arranged in this order from the underside of the magnetic card 29. The magnetic layer 32 is formed of a ferromagnetic material and the base layer 31 is formed of polyethylene terephthalate. Note that, on the magnetic head 19, instead of the microprocessor 26, any one of digital ICs including a gate array, a field-programmable gate array, and dedicated hardware may be mounted.

As shown in FIG. 4, the microprocessor 26 has a central processing unit 35 and a memory 36 (flash memory or EEROM). The central processing unit 35 of the processor 26 is formed of a computing unit 37 and a control unit 38.
The central processing unit 35 starts an application stored in the memory 36, based on control of an operating system and executes the following means according to the started application. The central processing unit 35 executes a mutual authentication means for mutually performing authentication with the external server 11 or the host computer 13.

When unencrypted firmware is downloaded to the magnetic head 19 from the external server 11, the central processing unit 35 of the microprocessor 26 executes a firmware storage means for storing the firmware in the memory 36. Alternatively, when encrypted firmware is downloaded to the magnetic head 19 from the server 11, the central processing unit 35 executes a firmware decryption means for decrypting the encrypted firmware using keys stored in the memory 36, and executes the firmware storage means for storing the decrypted firmware in the memory 36. When new upgraded firmware is downloaded to the magnetic head 19 from the server 11, the central processing unit 35 executes a firmware update means for rewriting a pre-upgrade version of firmware to the post-upgrade version of firmware.

When firmware is stored in the memory 36, the central processing unit 35 of the microprocessor 26 starts the firmware stored in the memory and executes the following means according to the started firmware. When various pre-encrypted encryption algorithms are downloaded to the magnetic head 19 from the external server 11, the central processing unit 35 executes an algorithm storage means for storing the encryption algorithms in the memory 36. Alternatively, when various post-encrypted encryption algorithms are downloaded to the magnetic head 19 from the external server 11, the central processing unit 35 executes an algorithm decryption means for decrypting the encrypted encryption algorithms using keys stored in the memory 36, and executes the algorithm storage means for storing the decrypted encryption algorithms in the memory 36.

When a new unencrypted encryption algorithm is downloaded to the magnetic head 19 from the external server 11, the central processing unit 35 of the microprocessor 26 executes an algorithm update means for rewriting an already stored encryption algorithm to the new encryption algorithm. Alternatively, when a new encrypted encryption algorithm is downloaded to the magnetic head 19 from the external server 11, the central processing unit 35 executes the algorithm decryption means for decrypting the new encrypted encryption algorithm using keys stored in the memory 36, and executes the algorithm update means for rewriting an already stored encryption algorithm to the new decrypted encryption algorithm. The central processing unit 35 executes a format-support reading means for reading various data from the card 29, supporting various formats of the magnetic card 29, and executes a data encryption means for encrypting card data (digital signal) based on a predetermined encryption algorithm. The central processing unit 35 executes an encrypted data output means for outputting the encrypted card data to the host computer 13.

The host computer 13 has a central processing unit (CPU or MPU) and a memory (large capacity hard disk). The central processing unit of the computer 13 is formed of a computing unit and a control unit. An input apparatus 39, such as a keyboard and a mouse, and an output apparatus 40, such as a display and a printer, are connected to the computer 13 via an interface. The central processing unit of the computer 13 starts an application stored in the memory, based on control of an operating system and executes the following means according to the started application.

The central processing unit of the host computer 13 executes a mutual authentication means for mutually performing authentication with the microprocessor 26 of the magnetic head 19. When encrypted card data is output from the magnetic head 19, the central processing unit of the computer 13 executes a data decryption means for decrypting the data, and executes a data storage means for storing the decrypted data in the memory. The central processing unit of the computer 13 executes a data output means for outputting the decrypted data through the output apparatus 40. Note that power is supplied to the external server 11, the magnetic card reader 12, the host computer 13, the input apparatuses 14 and 39, and the output apparatuses 15 and 40 via wiring lines.

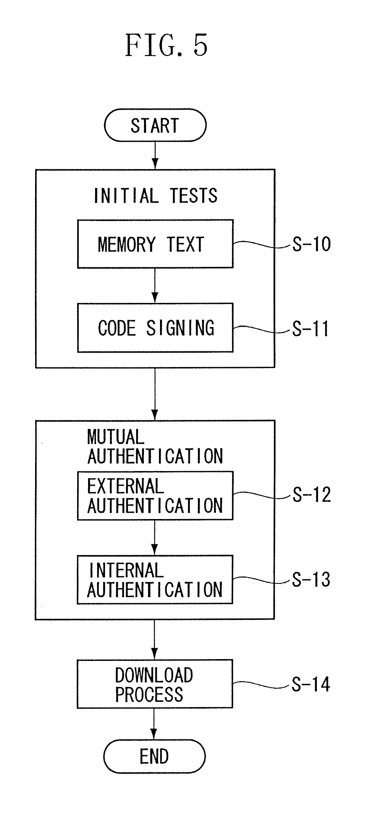

FIG. 5 is a block diagram showing an example of a process performed between the external server 11 and the magnetic head 19. Description of an example of mutual authentication performed between the external server 11 and the magnetic head 19 is as follows. When the system 10 is activated, the external server 11, the magnetic card reader 12, and the host computer 13 run. The server 11 accesses the card reader 12 via the Internet using the URL of the card reader 12 (access means). Alternatively, the card reader 12 accesses the server 11 via the Internet using the URL of the server 11.

When the external server 11 and the controller of the magnetic card reader 12 are connected to each other via the Internet, the central processing unit of the server 11 and the central processing unit 35 of the microprocessor 26 are connected to each other through the controller of the card reader 12. The central processing unit of the server 11 and the central processing unit 35 of the processor 26 perform a memory test (S-10) and code signing (S-11) (initial tests). In the code signing (S-11), it is determined whether the object code of firmware has not been rewritten. When the initial tests are done and the results thereof are correct, the central processing unit of the server 11 and the central processing unit 35 of the processor 26 perform mutual authentication to determine their validity (mutual authentication means). In the mutual authentication, the server 11 performs external authentication (S-12) to authenticate the validity of the magnetic head 19 and thereafter the magnetic head 19 performs internal authentication (S-13) to authenticate the validity of the server 11.

If the central processing unit of the external server 11 and the central processing unit 35 of the microprocessor 26 determine that the results of mutual authentication obtained by the mutual authentication are valid, then a download of firmware or an encryption algorithm to the magnetic head 19 from the server 11 is enabled and thus a download process is performed between the server 11 and the processor 26 (S-14). If, on the other hand, at least one of the server 11 and the processor 26 determines that an authentication result is invalid, then an authentication invalid message is displayed on a display of the server 11, and thus, firmware or an encryption algorithm cannot be downloaded to the magnetic head 19.

Mutual authentication between the server 11 and the processor 26 may be performed each time the system 10 is activated, or may be performed on a date and time, weekly, or monthly basis when the system 10 continuously runs, or may be performed each time firmware is downloaded to the magnetic head 19, or may be performed each time an encryption algorithm is downloaded to the magnetic head 19. Note that it is also possible that, without the server 11 and the processor 26 performing mutual authentication, the server 11 and the processor 26 are connected to each other via the Internet and the server 11 downloads firmware or an encryption algorithm to the magnetic head 19.

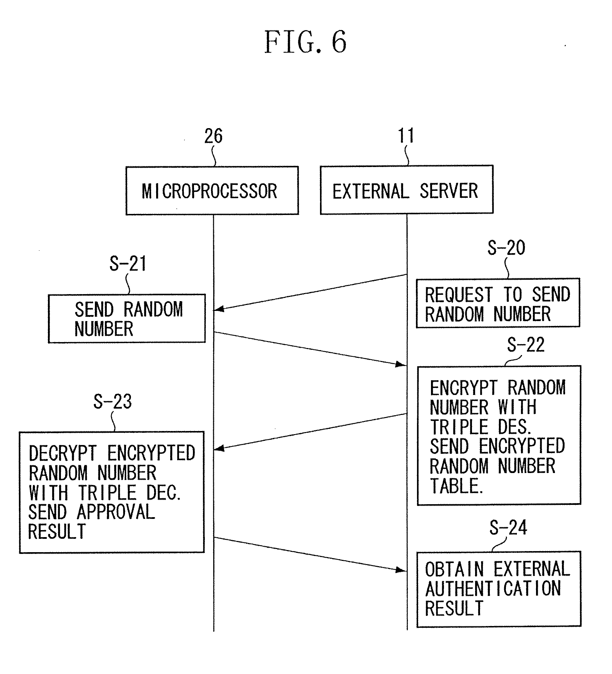

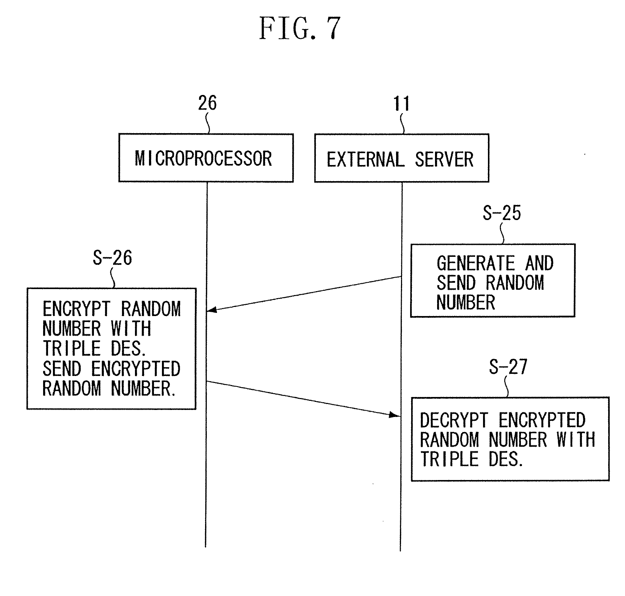

FIG. 6 is a ladder diagram showing an example of the external authentication and FIG. 7 is a ladder diagram showing an example of the internal authentication. An authentication procedure for external authentication is as follows. The central processing unit of the external server 11 requests the central processing unit 35 of the microprocessor 26 to generate and send a random number (authenticator) (S-20). The central processing unit 35 of the processor 26 generates a 64-bit random number in response to the instruction from the server 11, and sends the generated random number to the server 11 (S-21). The central processing unit of the server 11 having obtained the 64-bit random number encrypts the random number with Triple DES (Data Encryption Standard) using authentication keys stored in the memory, and thereafter, sends the encrypted random number to the processor 26 (S-22). The central processing unit 35 of the processor 26 decrypts the encrypted random number with Triple DES using authentication keys stored in the memory 36. The central processing unit 35 of the processor 26 compares the random number generated thereby with the decrypted random number. If the two random numbers are the same, then the central processing unit 35 determines that an authentication result is valid, and thus, sends authentication result valid information to the server 11 (S-23). If, on the other hand, the generated random number and the decrypted random number are different, then the central processing unit 35 determines that an authentication result is invalid, and thus, sends authentication result invalid information to the server 11 (S-23). The server 11 obtains an external authentication result from the processor 26 (S-24).

In Triple DES, by repeating Single DES (Data Encryption Standard) three times, an increase in key length and a reduction in algorithm bias are achieved, enhancing the encryption strength. Triple DES includes 3-Key Triple DES in which all three keys are different, and 2-Key Triple DES in which the same key is used for the first and third encryptions. Note that Triple DES may be either 3-Key Triple DES or 2-Key Triple DES. Note also that DES may be Single DES instead of Triple DES.

An authentication procedure for internal authentication is as follows. The central processing unit of the external server 11 generates a 64-bit random number (authenticator) and sends the 64-bit random number to the microprocessor 26 (S-25). The central processing unit 35 of the processor 26 having obtained the 64-bit random number encrypts the random number with Triple DES using authentication keys stored in the memory 36, and thereafter, sends the encrypted random number to the server 11 (S-26). The central processing unit of the server 11 decrypts the encrypted random number with Triple DES using authentication keys stored in the memory (S-27). The central processing unit of the server 11 compares the random number generated thereby with the decrypted random number. If the two random numbers are the same, then the central processing unit of the server 11 determines that an authentication result is valid. If, on the other hand, the generated random number and the decrypted random number are different, then the central processing unit of the server 11 determines that an authentication result is invalid, and thus, does not allow a download of firmware or an encryption algorithm to the magnetic head 19.

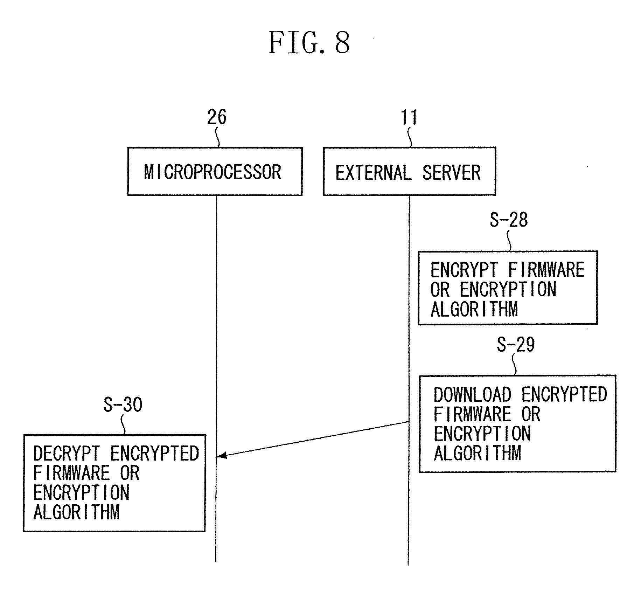

FIG. 8 is a ladder diagram showing an example of a download process performed between the external server 11 and the microprocessor 26. In the memory of the external server 11, firmware, encryption algorithms, and encryption keys for encrypting the firmware and the encryption algorithms are stored. New upgraded firmware or a new upgraded encryption algorithm is stored in the memory of the external server 11 at any time, where necessary. In the memory 36 of the microprocessor 26, decryption keys for firmware and an encryption algorithm are stored.

The central processing unit of the external server 11 extracts firmware, an encryption algorithm, and encryption keys from the memory and encrypts the firmware or the encryption algorithm with Triple DES using the keys (the firmware encryption means or the algorithm encryption means) (S-28). The central processing unit of the server 11 downloads the encrypted firmware or encryption algorithm to the magnetic head 19 via the Internet (the first firmware download means or the first algorithm download means) (S-29). Note that, when firmware or an encryption algorithm is not encrypted, the central processing unit of the server 11 downloads them to the magnetic head 19 as they are without encryption (the first firmware download means and the first algorithm download means) (S-29).

When the central processing unit of the external server 11 needs to download new upgraded firmware or a new upgraded encryption algorithm to the magnetic head 19, the central processing unit of the external server 11 extracts new firmware or a new encryption algorithm and encryption keys from the memory and encrypts the firmware or the encryption algorithm with Triple DES using the keys (the firmware encryption means or the algorithm encryption means) (S-28). The central processing unit of the server 11 downloads the new encrypted firmware and the new encrypted encryption algorithm to the magnetic head 19 via the Internet (the second firmware download means and the second algorithm download means) (S-29). Note that, when new firmware or a new encryption algorithm is not encrypted, the central processing unit of the server 11 downloads them to the magnetic head 19 as they are without encryption (the second firmware download means and the second algorithm download means) (S-29). The firmware or the encryption algorithm downloaded from the server 11 is temporarily stored in the memory of the controller of the magnetic card reader 19 and thereafter output to the magnetic head 19 from the controller.

When the central processing unit 35 of the microprocessor 26 receives the encrypted firmware and encryption algorithm from the external server 11, the central processing unit 35 extracts decryption keys from the memory 36 and decrypts the encrypted firmware or encryption algorithm with Triple DES using the keys (the firmware decryption means or the algorithm decryption means) (S-30). The central processing unit 35 stores the decrypted firmware and encryption algorithm in the memory 36 (the firmware storage means and the algorithm storage means). When unencrypted firmware and an unencrypted encryption algorithm are received from the external server 11, the central processing unit 35 stores the firmware or the encryption algorithm in the memory 36 (the firmware storage means or the algorithm storage means).

When the central processing unit 35 of the microprocessor 26 receives the new encrypted firmware and the new encrypted encryption algorithm from the external server 11, the central processing unit 35 decrypts the new encrypted firmware or the new encrypted encryption algorithm with Triple DES using decryption keys (the firmware decryption means or the algorithm decryption means) (S-30). The central processing unit 35 rewrites a pre-upgrade version of firmware to the post-upgrade version of decrypted firmware (the firmware update means) and stores the post-upgrade version of firmware in the memory 36. The central processing unit 35 further rewrites an already stored encryption algorithm to the new decrypted encryption algorithm (the algorithm update means) and stores the new encryption algorithm in the memory 36. When new unencrypted firmware or a new unencrypted encryption algorithm is received from the server 11, the central processing unit 35 rewrites a pre-upgrade version of firmware to the post-upgrade version of firmware (the firmware update means) and stores the post-upgrade version of firmware in the memory 36, and rewrites an already stored encryption algorithm to the new encryption algorithm (the algorithm update means) and stores the new encryption algorithm in the memory 36.

A rewrite of firmware is performed when the firmware is upgraded or when the specifications of the magnetic card 29 are changed and thus the format of the card 29 is changed. A rewrite of an encryption algorithm is performed when the need for a rewrite arises due to the algorithm having been analyzed by a third party, or each time the system 10 is activated, or on a date and time, weekly, or monthly basis, or when, after synchronization is lost, synchronization is achieved again.

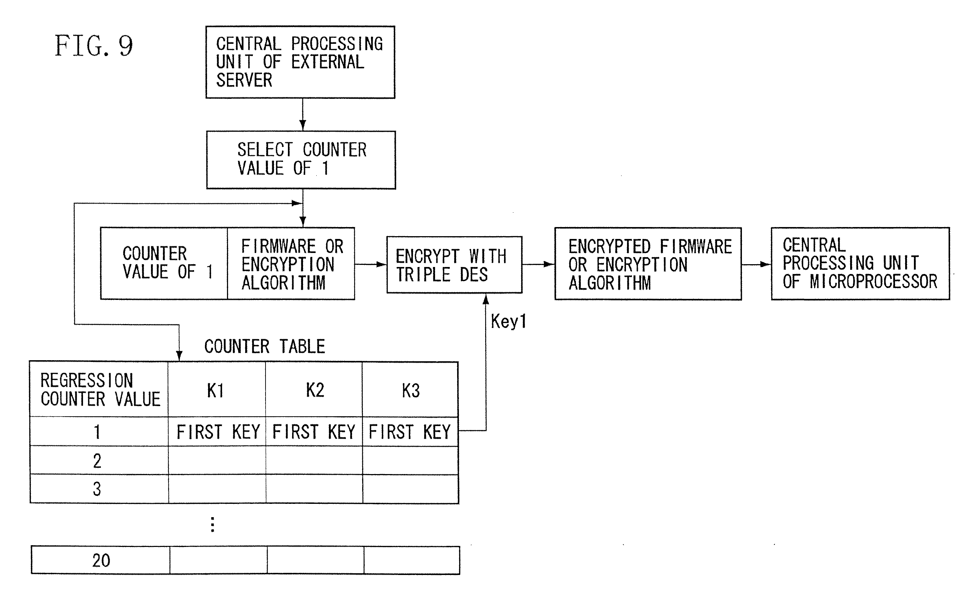

FIGS. 9 to 14 are diagrams for describing an example of generation of keys used for encryption and decryption. Each time encrypted firmware or an encrypted encryption algorithm is downloaded to the magnetic head 19, the central processing unit of the external server 11 and the central processing unit 35 of the microprocessor 26 generate, in synchronization with each other, new second to nth keys in turn which are identical and required for encryption and decryption of firmware or an encryption algorithm, using identical and finite regression counter values which are stored in advance in the memory 36 thereof (key generation means). Description of an example of a key generation procedure performed by the central processing unit of the server 11 and the central processing unit 35 of the processor 26 is as follows. Note that the regression counter values range from 1 to 20. Note, however, that there is no particular limitation on the regression counter value and the counter value may be 21 or more.

When the external server 11 downloads the first firmware (new firmware) or encryption algorithm (new algorithm) to the magnetic head 19, the central processing unit of the server 11 selects, as shown in FIG. 9, a regression counter value of 1 from a counter table stored in the memory, and attaches a counter value of 1 to the firmware or the encryption algorithm. In the counter table, storage areas for the respective counter values (1 to 20) and three key storage areas (K1, K2, and K3) associated with each storage area are created. Note, however, that, in the counter table in FIG. 9, 2nd to 20th keys associated with regression counter values of 2 to 20, respectively, are not generated. Note that a first key (Key1) associated with a counter value of 1 is set as an initial value upon introduction of the system 10.

The central processing unit of the external server 11 extracts first keys associated with a counter value of 1 from the counter table, encrypts firmware or an encryption algorithm and a counter value of 1 with Triple DES (3-Key Triple DES) using the first keys (the firmware encryption means or the algorithm encryption means), and downloads the encrypted firmware or encryption algorithm to the magnetic head 19 (the first firmware download means or the first algorithm download means). After the central processing unit of the server 11 downloads the encrypted firmware or encryption algorithm to the magnetic head 19, the central processing unit of the server 11 changes the regression counter value from 1 to 2 and stores a counter value of 2 in the memory.

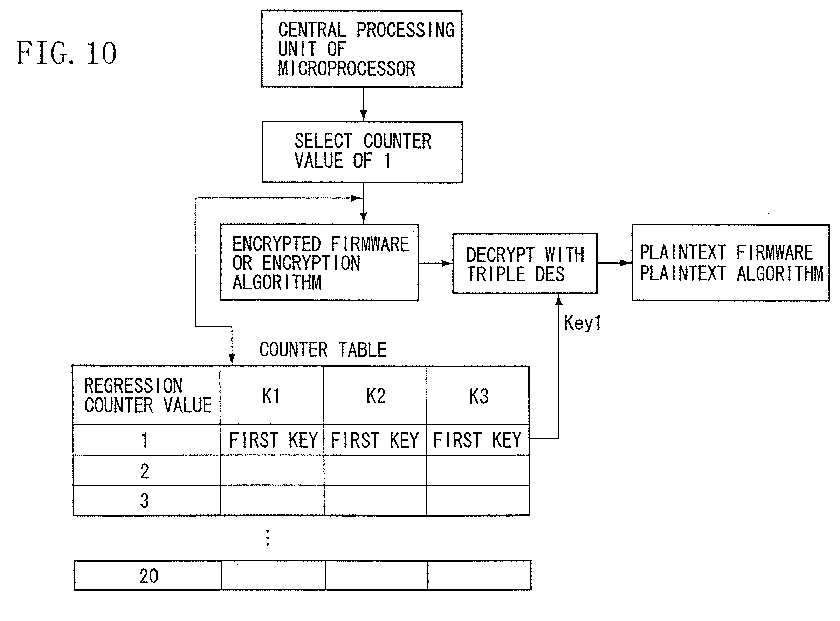

The central processing unit 35 of the microprocessor 26 having received the encrypted firmware (the first firmware) or the encrypted encryption algorithm (the first encryption algorithm) selects, as shown in FIG. 10, a regression counter value of 1 from a counter table stored in the memory 36. In the counter table, storage areas for the respective counter values (1 to 20) and three key storage areas (K1, K2, and K3) associated with each storage area are created. Note, however, that, in the counter table in FIG. 10, 2nd to 20th keys associated with regression counter values of 2 to 20, respectively, are not generated. Note that a first key (Key1) associated with a counter value of 1 is the same as the first key stored in the memory of the external server 11, and is set as an initial value upon introduction of the system 10.

The central processing unit 35 of the microprocessor 26 extracts first keys associated with a counter value of 1 from the counter table, and decrypts the encrypted firmware or encryption algorithm with Triple DES (3-Key Triple DES) using the first keys and thereby obtains plaintext firmware or a plaintext algorithm (the firmware decryption means or the algorithm decryption means). After the central processing unit 35 decrypts the firmware or the encryption algorithm, the central processing unit 35 stores them in the memory 36 (the firmware storage means and the algorithm storage means), changes the regression counter value from 1 to 2, and stores a counter value of 2 in the memory 36.

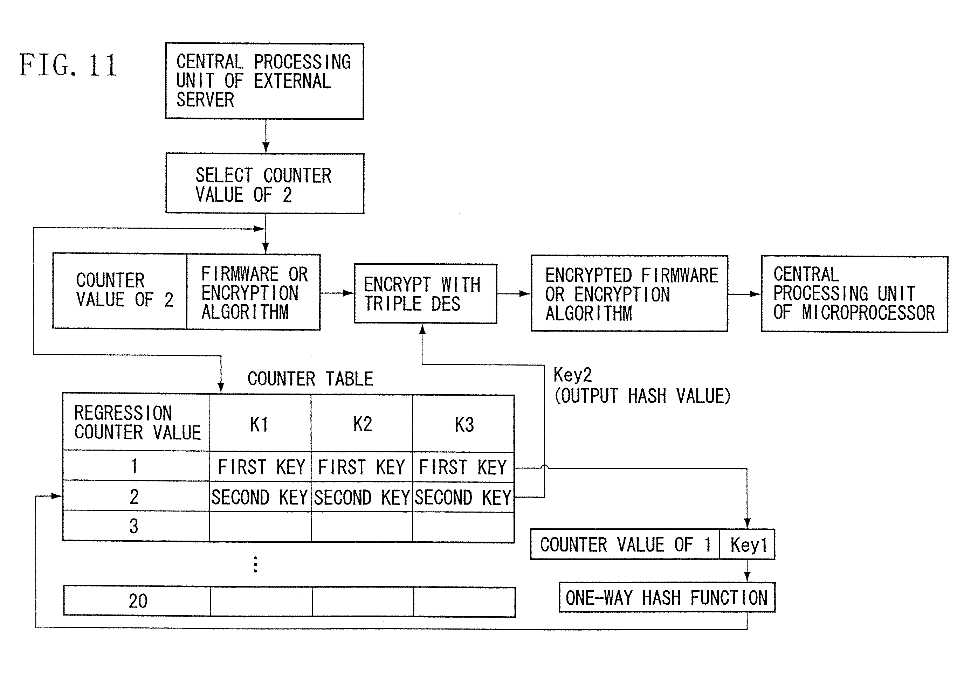

The external server 11 can stop the use of firmware or an encryption algorithm which is currently used by the microprocessor 26, select new firmware or a new algorithm from among firmware and encryption algorithms stored in the memory, and allow the microprocessor 26 to use the firmware or the algorithm. When the server 11 downloads the second firmware (upgraded firmware) or the second encryption algorithm (new encryption algorithm) to the magnetic head 19, the central processing unit of the external server 11 selects, as shown in FIG. 11, a regression counter value of 2 from the counter table stored in the memory, and attaches a counter value of 2 to the second firmware or encryption algorithm.

The central processing unit of the external server 11 generates an output hash value which is obtained by hashing the first key (initial value) associated with a counter value of 1 and the counter value of 1 using a one-way hash function, and uses the output hash value as a second key (Key2) associated with a counter value of 2 (the key generation means). The output hash value serving as the second key (Key2) is written to key storage areas (K1, K2, and K3) associated with a counter value of 2 in the counter table. Note that, in the counter table in FIG. 11, 3rd to 20th keys associated with regression counter values of 3 to 20, respectively, are not generated.

The central processing unit of the external server 11 extracts second keys associated with a counter value of 2 from the counter table, encrypts firmware or an encryption algorithm (including a counter value of 2) with Triple DES (3-Key Triple DES) using the second keys (the firmware encryption means or the algorithm encryption means), and downloads the encrypted firmware or encryption algorithm to the magnetic head 19 (the second firmware download means or the second algorithm download means). After the central processing unit of the server 11 downloads the encrypted firmware or encryption algorithm to the magnetic head 19, the central processing unit of the server 11 changes the regression counter value from 2 to 3 and stores a counter value of 3 in the memory.

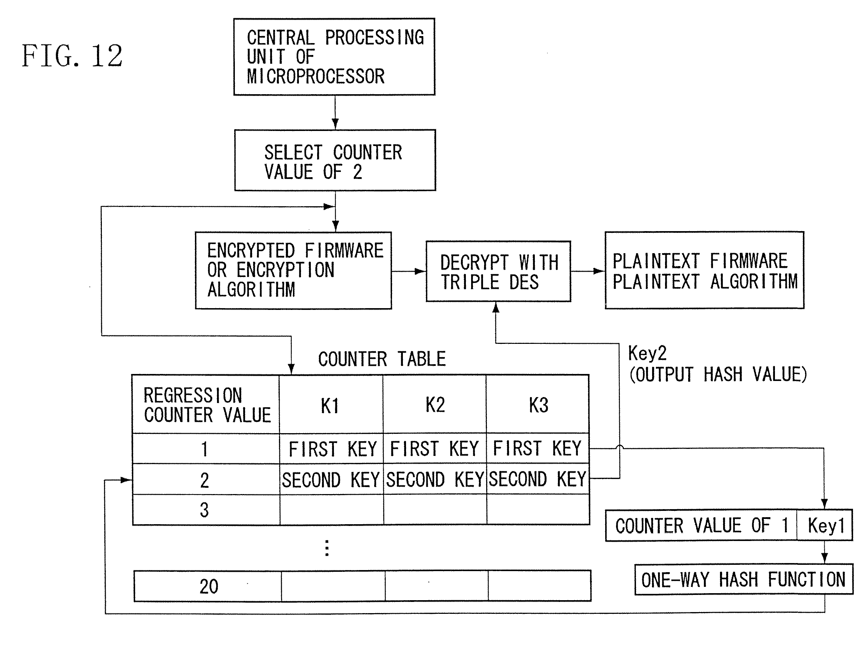

The central processing unit 35 of the microprocessor 26 having received the encrypted firmware (the second firmware) or encryption algorithm (the second encryption algorithm) selects, as shown in FIG. 12, a regression counter value of 2 from the counter table stored in the memory 36. The central processing unit 35 generates an output hash value which is obtained by hashing the first key (initial value) associated with a counter value of 1 and the counter value of 1 using the one-way hash function, and uses the output hash value as a second key (Key2) associated with a counter value of 2 (the key generation means). The hash function used by the central processing unit 35 is the same as that used by the central processing unit of the server 11, and the generated second key (Key2) is the same as that generated by the central processing unit of the server 11. The output hash value serving as the second key (Key2) is written to key storage areas K1, K2, and K3) associated with a counter value of 2 in the counter table. Note that, in the counter table in FIG. 12, 3rd to 20th keys associated with regression counter values of 3 to 20, respectively, are not generated.

The central processing unit 35 of the microprocessor 26 extracts second keys associated with a counter value of 2 from the counter table, and decrypts the encrypted firmware or encryption algorithm with Triple DES (3-Key Triple DES) using the second keys and thereby obtains plaintext firmware or a plaintext algorithm (the firmware decryption means or the algorithm decryption means). After the central processing unit 35 decrypts the firmware or the encryption algorithm, the central processing unit 35 stores them in the memory 36 (the firmware storage means and the algorithm storage means), changes the regression counter value from 2 to 3, and stores a counter value of 3 in the memory 36.

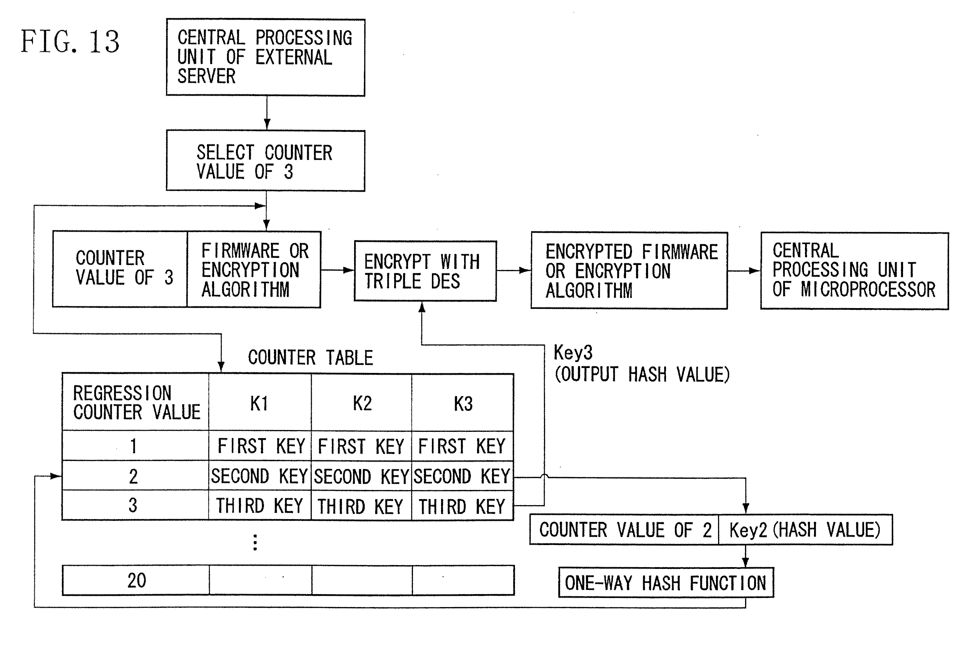

When the external server 11 downloads the third firmware (upgraded firmware) or the third encryption algorithm (new encryption algorithm) to the magnetic head, the central processing unit of the server 11 selects, as shown in FIG. 13, a regression counter value of 3 from the counter table stored in the memory, and attaches a counter value of 3 to the third firmware or encryption algorithm.

The central processing unit of the external server 11 generates an output hash value which is obtained by hashing the second key (Key2, a hash value) associated with a counter value of 2 and the counter value of 2 using the one-way hash function, and uses the output hash value as a third key (Key3) associated with a counter value of 3 (the key generation means). The output hash value serving as the third key (Key3) is written to key storage areas (K1, K2, and K3) associated with a counter value of 3 in the counter table. Note that, in the counter table in FIG. 13, 4th to 20th keys associated with regression counter values of 4 to 20, respectively, are not generated.

The central processing unit of the external server 11 extracts third keys associated with a counter value of 3 from the counter table, encrypts firmware or an encryption algorithm (including a counter value of 3) with Triple DES (3-Key Triple DES) using the third keys (the firmware encryption means or the algorithm encryption means), and downloads the encrypted firmware or encryption algorithm to the magnetic head 19 (the second firmware download means or the second algorithm download means). After the central processing unit of the server 11 downloads the encrypted firmware or encryption algorithm to the magnetic head 19, the central processing unit of the server 11 changes the regression counter value from 3 to 4 and stores a counter value of 4 in the memory.

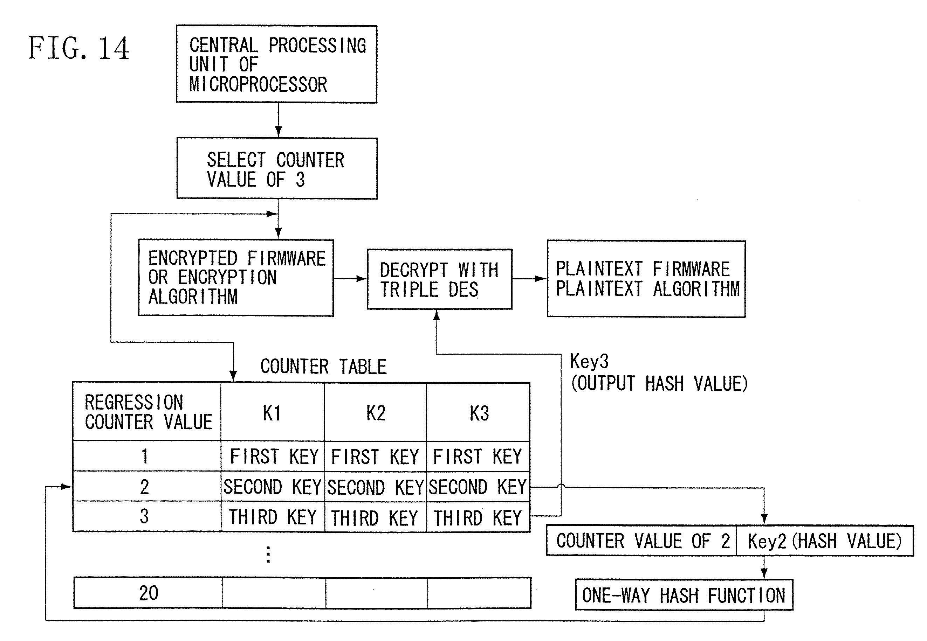

The central processing unit 35 of the microprocessor 26 having received the encrypted firmware (the third firmware) or encryption algorithm (the third encryption algorithm) selects, as shown in FIG. 14, a regression counter value of 3 from the counter table stored in the memory 36. The central processing unit 35 generates an output hash value which is obtained by hashing the second key (Key2) associated with a counter value of 2 and the counter value of 2 using the one-way hash function, and uses the output hash value as a third key (Key3) associated with a counter value of 3 (the key generation means). The third key (Key3) generated by the central processing unit 35 is the same as that generated by the central processing unit of the external server 11. The output hash value serving as the third key (Key3) is written to key storage areas (K1, K2, and K3) associated with a counter value of 3 in the counter table. Note that, in the counter table in FIG. 14, 4th to 20th keys associated with regression counter values of 4 to 20, respectively, are not generated.

The central processing unit 35 of the microprocessor 26 extracts third keys associated with a counter value of 3 from the counter table, and decrypts the encrypted firmware or encryption algorithm with Triple DES (3-Key Triple DES) using the third keys and thereby obtains plaintext firmware or a plaintext algorithm (the firmware decryption means or the algorithm decryption means). After the central processing unit 35 decrypts the firmware or the encryption algorithm, the central processing unit 35 stores them in the memory 36 (the firmware storage means and the algorithm storage means), changes the regression counter value from 3 to 4, and stores a counter value of 4 in the memory 36.

As such, the central processing unit of the external server 11 and the central processing unit 35 of the microprocessor 26 generate, in synchronization with each other, second to nth keys using regression counter values of 1 to 20 in turn and using a one-way hash function. When the regression counter value exceeds 20, the central processing unit of the server 11 and the central processing unit 35 of the processor 26 use a counter value of 1 again to generate 21st to 40th keys in turn. When the central processing unit of the server 11 and the central processing unit 35 of the processor 26 generate a 21st key, the central processing unit of the server 11 and the central processing unit 35 rewrite first keys stored in corresponding key storage areas to the 21st keys. When the central processing unit of the server 11 and the central processing unit 35 generate a 22nd key, the central processing unit of the server 11 and the central processing unit 35 rewrite second keys stored in corresponding key storage areas to the 22nd keys.

In the magnetic card reading system 10, the central processing unit of the external server 11 and the central processing unit 35 of the microprocessor 26 can determine mutual validity by executing the mutual authentication means. Thus, even when a fake server is connected to the magnetic head 19 or when a fake magnetic head is connected to the external server 11, such a fake can be detected. In this system 10, a third party cannot access the magnetic head 19 using a fake server and thus unauthorized use of the magnetic card 29 by a third party by firmware tampering can be prevented. In addition, in the system 10, since a third party cannot access the external server 11 using a fake magnetic head, an encryption algorithm is not downloaded to the fake magnetic head from the server 11.

In the system 10, since the central processing unit of the external server 11 and the central processing unit 35 of the microprocessor 26 individually generate second to nth keys, there is no need to send a key from the server 11 to the processor 26, enabling to prevent unauthorized acquisition of a key in the process of sending the key. In the system 10, the central processing unit of the server 11 encrypts firmware or an encryption algorithm, always using a different key, and the central processing unit 35 of the processor 26 decrypts firmware or an encryption algorithm, always using a different key. Thus, even if a key is obtained by a third party, the third party cannot decrypt firmware or an encryption algorithm. In addition, since a hash value is used for each of second to nth keys, even if a key is illegally obtained by a third party, the third party cannot crack the key, enabling to reliably prevent the use of the key by the third party.

In the system 10, the central processing unit of the external server 11 and the central processing unit 35 of the microprocessor 26 generate, in synchronization with each other, second to nth keys in turn, using identical and finite regression counter values. Thus, a key generated by the server 11 and a key generated by the processor 26 can match each other, enabling to prevent the inability to decrypt encrypted data due to a mismatch between generated keys. In addition, since an output hash value which is obtained by hashing a regression counter value is included in an output hash value which serves as one of second to nth keys, even if a third party illegally accesses the system 10, the third party cannot crack a hashed regression counter value and thus cannot determine which counter value is being used for synchronization between the central processing unit of the server 11 and the central processing unit 35 of the processor 26.

When the central processing unit of the external server 11 and the central processing unit 35 of the microprocessor 26 go out of sync while the system 10 is running, a key generated by the central processing unit of the server 11 is different from that generated by the central processing unit 35 of the processor 26, and thus, the central processing unit 35 cannot decrypt encrypted data which is downloaded from the central processing unit. In this case, the central processing unit 35 of the processor 26 determines that decryption with the generated key is impossible, and thus, sends "undecryptable" to the server 11 ("undecryptable" information sending means) and requests for resynchronization with the server 11 (resynchronization request means).

The central processing unit 35 of the microprocessor 26 requests the controller of the card reader 12 to access the external server 11, and encrypts "undecryptable" information and a resynchronization request with Triple DES using data transmission and reception keys stored in the memory 36. When the server 11 and the card reader 12 are connected to each other via the Internet, the central processing unit 35 of the processor 26 sends the encrypted "undecryptable" information and resynchronization request to the server 11. The central processing unit 36 of the processor 26 and the central processing unit of the server 11 having received the resynchronization request perform external authentication and internal authentication to determine their validity (see FIGS. 6 and 7) (the mutual authentication means). If the central processing unit of the server 11 and the central processing unit 35 of the processor 26 determine that the results of mutual authentication obtained by the mutual authentication are valid, then the central processing unit of the server 11 and the central processing unit 35 of the processor 26 bring their respective regression counter values back to 1 (initial value) and start synchronization again. When the central processing unit of the server 11 and the central processing unit 35 of the processor 26 bring their respective counter values back to 1, the central processing unit of the server 11 and the central processing unit 35 of the processor 26 perform encryption and decryption using first keys again.

In the system 10, even if a mismatch occurs between keys generated by the external server 11 and the microprocessor 26, the server 11 and the processor 26 can bring their respective regression counter values back to 1 and synchronize with each other again. Thus, a key generated by the server 11 and a key generated by the processor 26 can match each other again, enabling to prevent the inability to decrypt firmware or an encryption algorithm due to a mismatch between generated keys. Note that, in the case where the system 10 continuously runs and thus mutual authentication is performed on a date and time, weekly, or monthly basis, when the central processing unit of the server 11 and the central processing unit 35 of the processor 26 determine that the results of mutual authentication obtained by the mutual authentication are valid, the central processing unit of the server 11 and the central processing unit 35 of the processor 26 bring their respective regression counter values back to 1 and start synchronization again. Subsequent procedural steps are the same as those described based on FIGS. 9 to 14.

For a one-way hash function, any one of SHA-1 (Secure Hash Algorithm 1), MD2, MD4, MD5 (Message Digest2, 4, 5), RIPEMD-80, RIPEMD-128, RIPEMD-160, and N-Hash is used.
Such hash functions are stored in the memory of the external server 11 and the memory of the host computer 13.

For an encryption algorithm, in addition to DES, any one of RSA, AES (Advanced Encryption Standard), IDEA (International Data Encryption Algorithm), FEAL-N/NX (Fast Encryption Algorithm), MULTI2 (Multimedia Encryption2), MISTY, SXAL (Substitution Xor Algorithm), MBAL (Multi Block Algorithm), RC2, RC5, ENCRiP, SAFER (Secure And Fast Encryption Routine), Blowfish, Skipjack, Khufu, Khafre, CAST, and GOST28147-89 can also be used. Such algorithms are stored in the memory of the external server 11 and the memory of the host computer 13.

In the system 10, without the external server 11 and the microprocessor 26 performing key generation shown in FIGS. 9 to 14, the server 11 can download firmware or an encryption algorithm to the processor 26. Description of an example thereof is as follows. The external server 11 accesses the card reader 12 via the Internet, using the URL of the card reader 12 (the access means). Alternatively, the card reader 12 accesses the server 11 via the Internet, using the URL of the external server 11. When the server 11 and the card reader 12 are connected to each other via the Internet, the central processing unit of the server 11 and the central processing unit 35 of the microprocessor 26 are connected to each other through the controller. The central processing unit of the server 11 and the central processing unit 35 of the processor 26 perform external authentication and internal authentication to determine their validity (see FIGS. 6 and 7) (the mutual authentication means). If the central processing unit of the server 11 and the central processing unit 35 of the processor 26 determine that the results of mutual authentication obtained by the mutual authentication are valid, then a download of firmware or an encryption algorithm to the magnetic head 19 from the server 11 is enabled and thus a download process is performed between the server 11 and the processor 26.

The central processing unit of the external server 11 encrypts new firmware or a new encryption algorithm with Triple DES using information transmission and reception keys stored in the memory (the firmware encryption means or the algorithm encryption means), and downloads the encrypted firmware or algorithm to the magnetic head 19 (the first firmware download means or the first algorithm download means). The firmware or the encryption algorithm downloaded from the server 11 is temporarily stored in the memory of the controller of the card reader 12 and is thereafter output to the magnetic head 19.

When the central processing unit 35 of the microprocessor 26 receives the encrypted firmware or encryption algorithm from the server 11, the central processing unit 35 decrypts the encrypted firmware or algorithm with Triple DES using information transmission and reception keys stored in the memory 36 and thereby obtains plaintext firmware or a plaintext algorithm (the firmware decryption means or the algorithm decryption means), and stores the decrypted firmware or algorithm in the memory (the firmware storage means or the algorithm storage means) .

The external server 11 can stop the use of firmware or an encryption algorithm which is currently used by the microprocessor 26, select new firmware or a new algorithm from among firmware and encryption algorithms stored in the memory, and allow the microprocessor 26 to use the firmware or the algorithm. When the server 11 allows the processor 26 to use new firmware or a new encryption algorithm, the server 11 instructs the processor 26 to rewrite existing firmware or an existing encryption algorithm (update instruction). Note that it is assumed that external authentication and internal authentication (see FIGS. 6 and 7) have already been performed and the server 11 and the processor 26 have determined that the results of mutual authentication obtained by the mutual authentication have been valid.

The central processing unit of the external server 11 encrypts an update instruction and new firmware or a new encryption algorithm with Triple DES using information transmission and reception keys stored in the memory (the firmware encryption means or the algorithm encryption means) and downloads the encrypted update instruction and the encrypted firmware or algorithm to the magnetic head 19 (the second firmware download means or the second algorithm download means). The update instruction and the firmware or the encryption algorithm which are downloaded from the server 11 are temporarily stored in the memory of the controller of the card reader 12 and are thereafter output to the magnetic head 19.

When the central processing unit 35 of the microprocessor 26 receives the encrypted update instruction and the encrypted firmware or encryption algorithm from the external server 11, the central processing unit 35 decrypts the encrypted update instruction and the encrypted firmware or algorithm with Triple DES using information transmission and reception keys stored in the memory 36 (the firmware decryption means or the algorithm decryption means). The central processing unit 35 rewrites existing firmware stored in the memory 36 to the new decrypted firmware (the firmware update means) and stores the new firmware in the memory 36. The central processing unit 35 further rewrites an existing algorithm stored in the memory 36 to the new decrypted algorithm (the algorithm update means) and stores the new algorithm in the memory 36. The central processing unit 35 notifies the server 11 of the completion of the update (update completion notification). The central processing unit 35 encrypts update completion notification with Triple DES using information transmission and reception keys stored in the memory 36, and sends the encrypted update completion notification to the server 11.

The external server 11 can stop the use of a hash function which is currently used, select a new hash function from among hash functions stored in the memory, and use the hash function. A change of a hash function may be performed each time the system 10 is activated, or may be performed on a date and time, weekly, or monthly basis, or may be performed when, after synchronization is lost, synchronization is achieved again. When the server 11 uses a new hash function, the server 11 instructs the microprocessor 26 to rewrite an existing hash function (function change instruction). The central processing unit of the server 11 accesses the card reader 12. When the server 11 and the card reader 12 are connected to each other via the Internet, the central processing unit of the server 11 and the central processing unit 35 of the processor 26 perform external authentication and internal authentication to determine their validity (see FIGS. 6 and 7) (the mutual authentication means). If the central processing unit of the server 11 and the central processing unit 35 of the processor 26 determine that the results of mutual authentication obtained by the mutual authentication are valid, then the central processing unit of the server 11 encrypts a function change instruction and a new hash function with Triple DES using data transmission and reception keys stored in the memory, and thereafter, sends the encrypted function change instruction and hash function to the processor 26.

When the central processing unit 35 of the microprocessor 26 receives the function change instruction and the hash function, the central processing unit 35 decrypts the encrypted function change instruction and hash function with Triple DES using data transmission and reception keys stored in the memory 36. The central processing unit 35 of the processor 26 changes an existing hash function stored in the memory 36 to the new decrypted hash function, and thereafter, notifies the external server 11 of the completion of the change (change completion notification means). The central processing unit 35 encrypts change completion notification with Triple DES using data transmission and reception keys stored in the memory 36, and sends the encrypted change completion notification to the server 11. In the system 10, since a change of a hash function is performed in such a manner that a function change instruction and a hash function are encrypted, a hash function to be used is not obtained by a third party, enabling to prevent a hash function from being cracked by a third party.

In the magnetic card reading system 10, when firmware or an encryption algorithm is downloaded to the magnetic head 19 from the external server 11, the processor 26 stores the firmware or the encryption algorithm in the memory 36. Thus, firmware or an encryption algorithm that is downloaded from the server 11 after the magnetic head 19 is shipped to the market or after the magnetic head 19 is installed in the magnetic card reader 12 can be stored in the processor 26 at any time.

In the system 10, even after the shipment or installation of the magnetic head 19, various firmware can be supported. Using such firmware, optimal control of the computation and storage functions of the processor 26 and external hardware can be performed according to the operating environment of the magnetic head 19. The system 10 can allow the magnetic head 19 to support various formats of the magnetic card 29 after the shipment or installation of the magnetic head 19. Thus, the system 10 can allow the magnetic head 19 to adapt to various specifications of the magnetic card 29 and to reliably read data stored in the card 29. In the system 10, even after the shipment or installation of the magnetic head 19, various encryption algorithms can be used, and card data can be encrypted using such algorithms. In the system 10, the processor 26 rewrites a pre-upgrade version of firmware to a post-upgrade version of firmware. Thus, even if firmware is upgraded after the shipment or installation of the magnetic head 19, the post-upgrade version of firmware can be immediately supported.

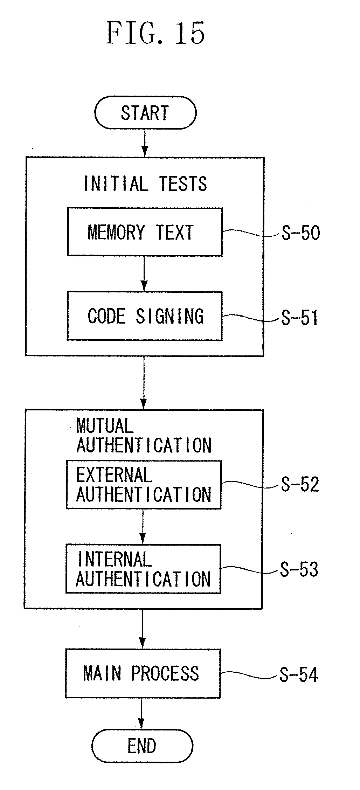

FIG. 15 is a block diagram showing an example of a process performed between the magnetic head 19 and the host computer 13. When the system 10 is activated, the central processing unit of the host computer 13 and the central processing unit 35 of the microprocessor 26 perform a memory test (S-50) and code signing (S-51) (initial tests). When the initial tests are done and the results thereof are correct, the central processing unit of the computer 13 and the central processing unit 35 of the processor 26 perform mutual authentication to determine their validity (the mutual authentication means). In the mutual authentication, the computer 13 performs external authentication (S-52) to authenticate the validity of the magnetic head 19 and thereafter the magnetic head 19 performs internal authentication (S-53) to authenticate the validity of the computer 13.

If the central processing unit of the computer 13 and the central processing unit 35 of the microprocessor 26 determine that the results of mutual authentication obtained by the mutual authentication are valid, then reading of the magnetic card 29 in the magnetic card reader 12 is enabled and thus a main process (S-54) is performed between the computer 13 and the processor 26. If, on the other hand, at least one of the computer 13 and the processor 26 determines that an authentication result is invalid, then reading of the magnetic card 29 by the card reader 12 cannot be performed and thus "unreadable" information is displayed on a display of the computer 13. Mutual authentication is performed not only each time the system 10 is activated, but also on a date and time, weekly, or monthly basis when the system 10 continuously runs. In addition, as will be described later, mutual authentication is performed when a synchronization mismatch occurs between the central processing unit of the computer 13 and the central processing unit 35 of the processor 26.

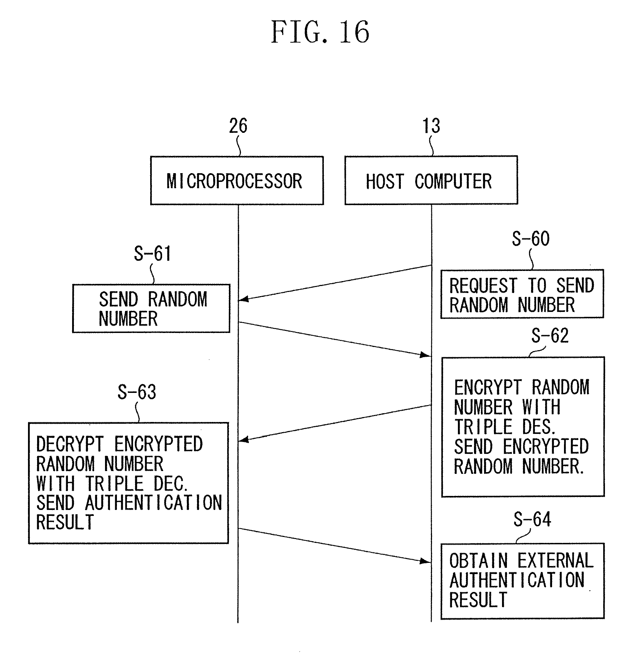

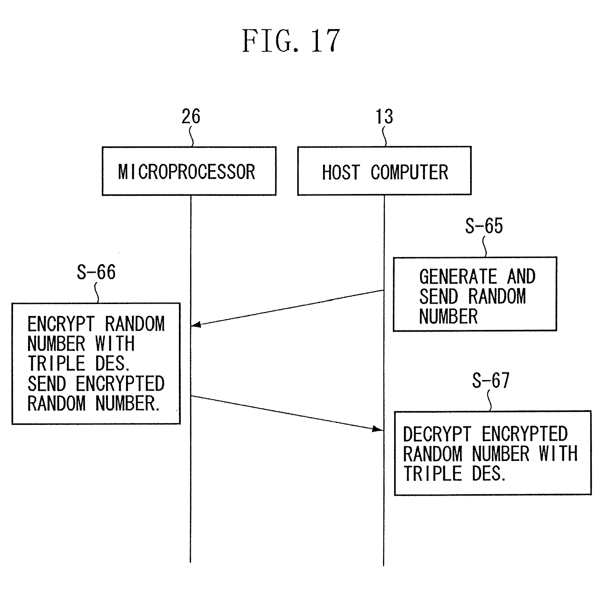

FIG. 16 is a ladder diagram showing an example of the external authentication and FIG. 17 is a ladder diagram showing an example of the internal authentication. An authentication procedure for external authentication is as follows. The central processing unit of the host computer 13 requests the central processing unit 35 of the microprocessor 26 to generate and send a random number (authenticator) (S-60). The central processing unit 35 of the processor 26 generates a 64-bit random number in response to the instruction from the computer 13, and sends the generated random number to the computer 13 (S-61). The central processing unit of the computer 13 having obtained the 64-bit random number encrypts the random number with Triple DES using authentication keys stored in the memory, and thereafter, sends the encrypted random number to the processor 26 (S-62).

The central processing unit 35 of the microprocessor 26 decrypts the encrypted random number with Triple DES using authentication keys stored in the memory 36 (S-63). The central processing unit 35 of the processor 26 compares the random number generated thereby with the decrypted random number. If the two random numbers are the same, then the central processing unit 35 determines that an authentication result is valid, and thus, sends authentication result valid information to the computer 13. If, on the other hand, the generated random number and the decrypted random number are different, then the central processing unit 35 determines that an authentication result is invalid, and thus, sends authentication result invalid information and information indicating the magnetic card 29 being unreadable to the computer 13. The computer 13 obtains an external authentication result from the microprocessor 26 (S-64).

An authentication procedure for internal authentication is as follows. The central processing unit of the computer 13 generates a 64-bit random number (authenticator) and sends the 64-bit random number to the microprocessor 26 (S-65). The central processing unit 35 of the processor 26 having obtained the 64-bit random number encrypts the random number with Triple DES using authentication keys stored in the memory 36, and thereafter, sends the encrypted random number to the computer 13 (S-66). The central processing unit of the computer 13 decrypts the encrypted random number with Triple DES using authentication keys stored in the memory (S-67). The central processing unit of the computer 13 compares the random number generated thereby with the decrypted random number. If the two random numbers are the same, then the central processing unit of the computer 13 determines that an authentication result is valid. If, on the other hand, the generated random number and the decrypted random number are different, then the central processing unit of the computer 13 determines that an authentication result is invalid, and thus, does not allow reading of the magnetic card 29 in the card reader 12.

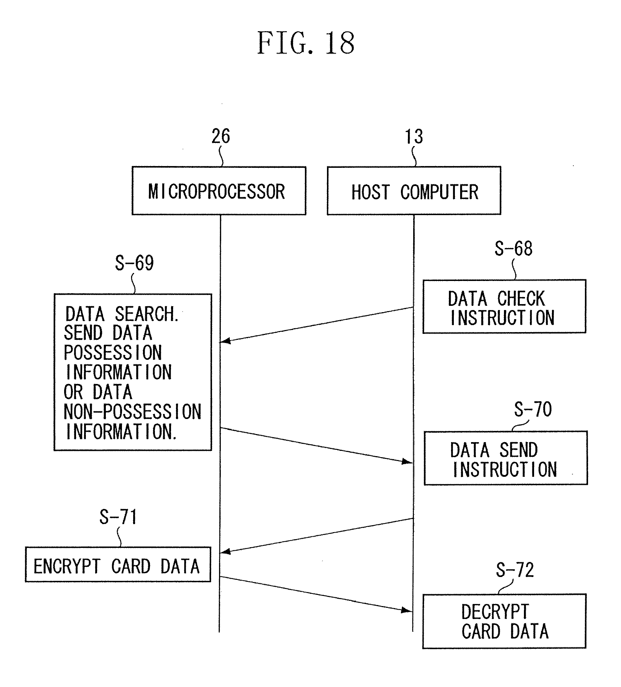

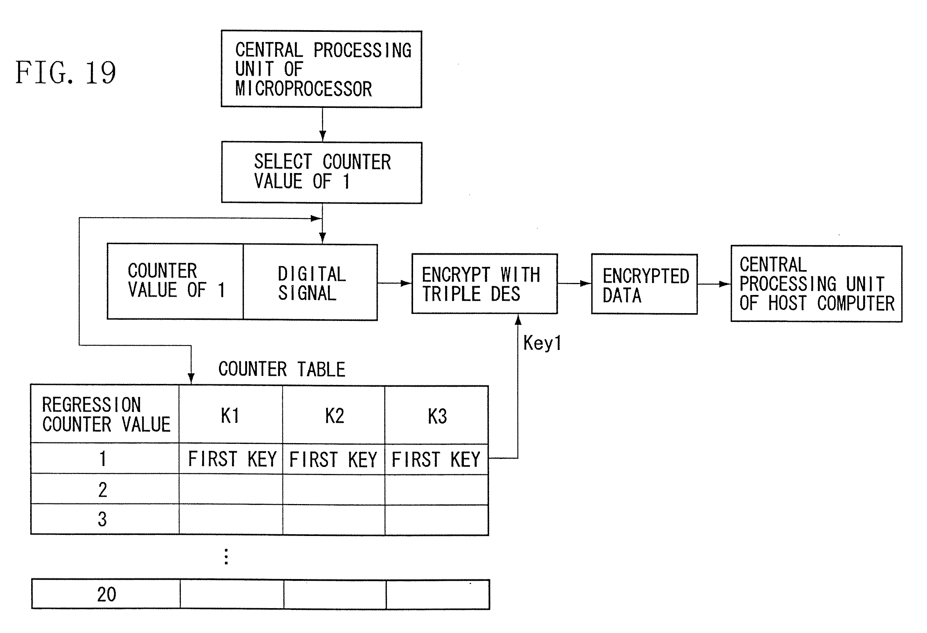

FIG. 18 is a ladder diagram showing an example of the main process in the system 10. FIGS. 19 to 24 are diagrams for describing another example of generation of keys used for encryption and decryption. When, after reading of the magnetic card 29 is enabled due to the results of mutual authentication being valid, a card holder inserts the magnetic card 29 through the card insertion opening 16, the motor 22 is driven and the card 29 moves on the guide rail 18. When the card 29 passes through the insertion opening 16, a relevant optical sensor 20 detects it, and a card insertion signal is output from the optical sensor 20 and is input to the controller of the card reader 12. When the controller receives the card insertion signal, the controller outputs an instruction to start reading card data stored in the card 29, to the microprocessor 26 of the magnetic head 19. When the magnetic card 29 passes through the magnetic head 19 and is ejected through the ejection opening 17, a relevant optical sensor 20 detects it and a card passing signal is output from the optical sensor 20 and is input to the controller of the card reader 12. When the controller receives the card passing signal, the controller outputs an instruction to stop reading the card data to the processor 26 of the magnetic head 19, and stops driving the motor 22.

When the magnetized magnetic layer 32 of the magnetic card 29 passes through the end portion 27 of the core 24 of the magnetic head 19 (a gap of the core 24), magnetic flux is generated in the core 24, and an induced electromotive force is generated in a direction that interlinks with the magnetic flux, whereby a current flows through the coil. The value of the current flowing through the coil changes with a change in magnetic flux. Card data stored on the magnetic layer 32 of the magnetic card 29 is extracted by the coil as an analog signal, and the analog signal is input to the A/D conversion chip 25 connected to the coil. The A/D conversion chip 25 converts the analog signal input from the coil, to a digital signal. The digital signal is input to the microprocessor 26 from the A/D conversion chip 25 and is stored in the memory 36 of the processor 26.

While the system 10 is running, the central processing unit of the host computer 13 inquires the processor 26 at predetermined time intervals whether there is card data to be processed in the memory 36 of the microprocessor 26 (data check instruction). The central processing unit of the computer 13 encrypts a data check instruction with Triple DES using information transmission and reception keys stored in the memory, and sends the encrypted data check instruction to the processor 26 (S-68). Note that it is preferred that the predetermined time intervals be seconds or milliseconds. When the central processing unit 35 of the processor 26 receives the data check instruction, the central processing unit 35 decrypts the encrypted data check instruction with Triple DES using information transmission and reception keys stored in the memory 36. The central processing unit 35 of the processor 26 searches the memory 36 in response to the data check instruction from the computer 13. If card data of the magnetic card 29 is stored in the memory 36 as a digital signal, then the central processing unit 35 sends, as a response, data possession to the computer 13 (data possession information). If there is no card data in the memory 36, then the central processing unit 35 sends, as a response, data non-possession to the computer 13 (data non-possession information). The processor 26 encrypts data possession information or data non-possession information with Triple DES using information transmission and reception keys, and sends the encrypted data possession information or data non-possession information to the computer 13 (S-69).

When the central processing unit of the host computer 13 receives the data possession information or the data non-possession information, the central processing unit of the host computer 13 decrypts the data possession information or the data non-possession information with Triple DES using information transmission and reception keys. When the central processing unit of the computer 13 receives data non-possession information, the central processing unit of the computer 13 sends an encrypted data check instruction again to the microprocessor 26 at the predetermined intervals, to inquire the processor 26 whether there is card data to be processed in the memory 36 (data check instruction). When the central processing unit of the computer 13 receives data possession information, the central processing unit of the computer 13 requests the processor 26 to send card data stored in the memory 36 of the processor 26 (data send instruction). The central processing unit of the computer 13 encrypts a data send instruction with Triple DES using information transmission and reception keys, and sends the encrypted data send instruction to the processor 26 (S-70). When the central processing unit 35 of the processor 26 receives the data send instruction, the central processing unit 35 decrypts the encrypted data send instruction with Triple DES using information transmission and reception keys.

The central processing unit 35 of the microprocessor 26 extracts a digital signal (card data) and encryption keys from the memory 36 and encrypts the digital signal using the keys and thereby obtains encrypted data (the data encryption means) (S-71). The central processing unit 35 sends the encrypted data to the host computer 13 (encrypted data sending means). The computer 13 has an amplifier circuit (not shown) that amplifies the encrypted data. The computer 13 extracts decryption keys from the memory and decrypts the encrypted data which is amplified by the amplifier circuit, using the keys (data decryption means) (S-72). The computer 13 can display the decrypted digital signal (plaintext card data) on the display as character information (the data output means) and can print out the decrypted digital signal (plaintext card data) to a printer as print information (the data output means). The computer 13 stores the encrypted digital signal or the decrypted digital signal in the memory (the data storage means). When the computer 13 decrypts the encrypted data, the computer 13 sends an encrypted data check instruction again to the processor 26 at the predetermined intervals, to inquire the processor 26 whether there is card data to be processed in the memory 36 (data check instruction).

Each time an encrypted digital signal is input to the computer 13, the central processing unit of the computer 13 and the central processing unit 35 of the microprocessor 26 generate, in synchronization with each other, new second to nth keys in turn which are identical and required for encryption and decryption of a digital signal, using identical and finite regression counter values stored in advance in the memory and the memory 36 (key generation means). Description of an example of a key generation procedure based on FIGS. 19 to 24, which is performed by the central processing unit of the computer 13 and the central processing unit 36 of the processor 26, is as follows. Note that the regression counter values range from 1 to 20. Note, however, that there is no particular limitation on the regression counter value and the counter value can be 21 or more.

After the system 10 is activated, when a data send instruction is received after the first digital signal (card data) is input to the microprocessor 26 from the A/D conversion chip 25 and the digital signal is stored in the memory 36, the central processing unit 35 of the processor 26 selects, as shown in FIG. 19, a regression counter value of 1 from a counter table stored in the memory 36, and attaches a counter value of 1 to the digital signal. In the counter table, storage areas for the respective counter values (1 to 20) and three key storage areas (K1, K2, and K3) associated with each storage area are created. Note, however, that, in the counter table in FIG. 19, 2nd to 20th keys associated with regression counter values of 2 to 20, respectively, are not generated. Note that a first key (Key1) associated with a counter value of 1 is set as an initial value upon introduction of the system 10.

The central processing unit 35 of the microprocessor 26 extracts first keys associated with a counter value of 1 from the counter table, encrypts the digital signal and a counter value of 1 with Triple DES (3-Key Triple DES) using the first keys and thereby obtains encrypted data (the data encryption means), and sends the encrypted data to the computer 13 (data sending means). After the central processing unit 35 of the processor 26 sends the encrypted data to the computer 13, the central processing unit 35 changes the regression counter value from 1 to 2 and stores a counter value of 2 in the memory 36, and deletes the first digital signal (card data) from the memory 36.

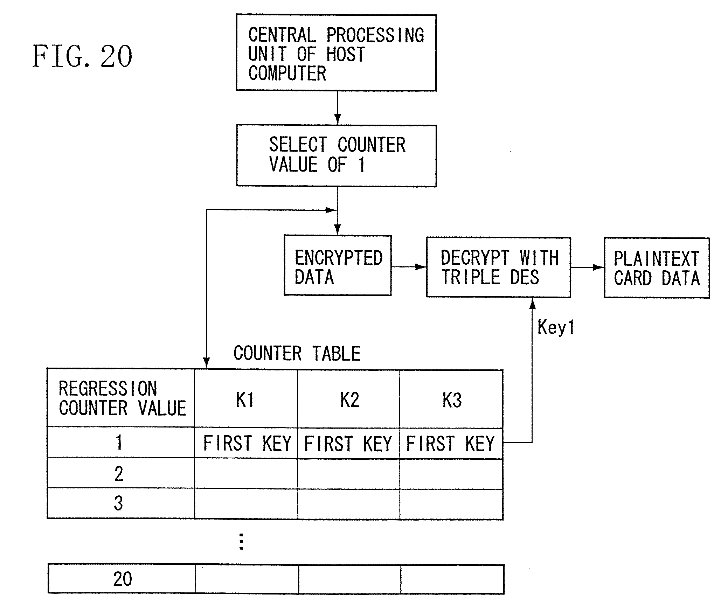

The central processing unit of the host computer 13 having received the first encrypted data selects, as shown in FIG. 20, a regression counter value of 1 from a counter table stored in the memory. In the counter table, storage areas for the respective counter values (1 to 20) and three key storage areas (K1, K2, and K3) associated with each storage area are created. Note, however, that, in the counter table in FIG. 20, 2nd to 20th keys associated with regression counter values of 2 to 20, respectively, are not generated. Note that a first key (Key1) associated with a counter value of 1 is the same as the first key stored in the memory 36 of the microprocessor 26, and is set as an initial value upon introduction of the system 10. The central processing unit of the computer 13 extracts first keys associated with a counter value of 1 from the counter table, and decrypts the encrypted data with Triple DES (3-Key Triple DES) using the first keys and thereby obtains a digital signal (plaintext card data). After the central processing unit of the computer 13 decrypts the encrypted data, the central processing unit of the computer 13 changes the regression counter value from 1 to 2 and stores a counter value of 2 in the memory.

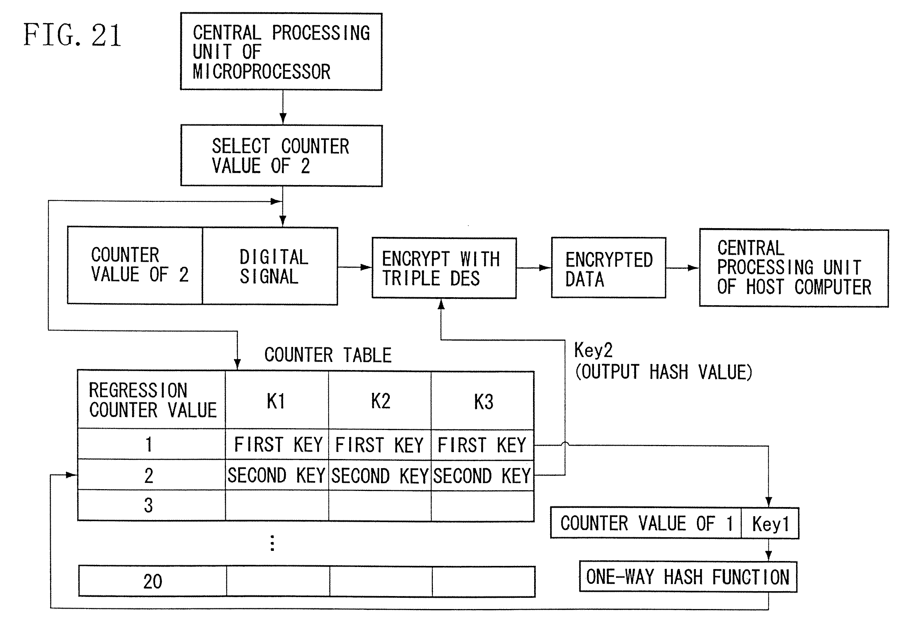

When a data send instruction is received after the second digital signal (card data) is input to the microprocessor 26 from the A/D conversion chip 25 and the digital signal is stored in the memory 36, the central processing unit 35 of the processor 26 selects, as shown in FIG. 21, a regression counter value of 2 from the counter table stored in the memory 36, and attaches a counter value of 2 to the digital signal. The central processing unit 36 of the processor 26 generates an output hash value which is obtained by hashing the first key (initial value) associated with a counter value of 1 and the counter value of 1 using a one-way hash function, and uses the output hash value as a second key (Key2) associated with a counter value of 2 (the key generation means). The output hash value serving as the second key (Key2) is written to key storage areas (K1, K2, and K3) associated with a counter value of 2 in the counter table. Note that, in the counter table in FIG. 21, 3rd to 20th keys associated with regression counter values of 3 to 20, respectively, are not generated.

The central processing unit 35 of the microprocessor 26 extracts second keys associated with a counter value of 2 from the counter table, encrypts the digital signal (including a counter value of 2) with Triple DES (3-Key Triple DES) using the second keys and thereby obtains encrypted data (the data encryption means), and sends the encrypted data to the computer 13. After the central processing unit 35 of the processor 26 sends the encrypted data to the computer 13, the central processing unit 35 changes the regression counter value from 2 to 3 and stores a counter value of 3 in the memory 36, and deletes the second digital signal (card data) from the memory 36.

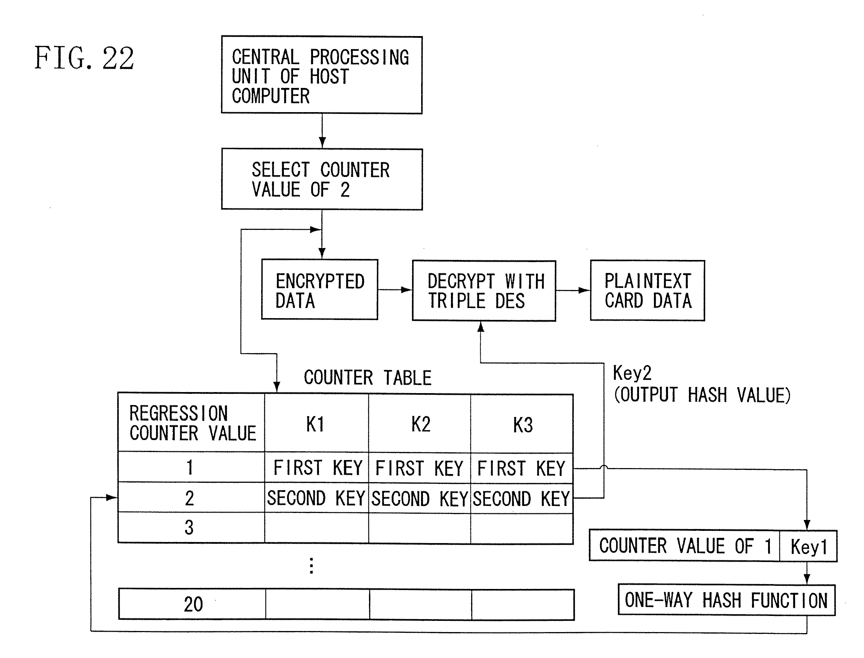

The computer 13 having received the second encrypted data selects, as shown in FIG. 22, a regression counter value of 2 from the counter table stored in the memory.
The central processing unit of the computer 13 generates an output hash value which is obtained by hashing the first key (initial value) associated with a counter value of 1 and the counter value of 1 using the one-way hash function, and uses the output hash value as a second key (Key2) associated with a counter value of 2 (the key generation means). The hash function used by the central processing unit of the computer 13 is the same as that used by the central processing unit 35 of the microprocessor 26, and the generated second key (Key2) is the same as that generated by the central processing unit 35 of the processor 26. The output hash value serving as the second key (Key2) is written to key storage areas (K1, K2, and K3) associated with a counter value of 2 in the counter table. Note that, in the counter table in FIG. 22, 3rd to 20th keys associated with regression counter values of 3 to 20, respectively, are not generated. The central processing unit of the computer 13 extracts second keys associated with a counter value of 2 from the counter table, and decrypts the encrypted data with Triple DES (3-Key Triple DES) using the second keys and thereby obtains a digital signal (plaintext card data). After the central processing unit of the computer 13 decrypts the encrypted data, the central processing unit of the computer 13 changes the regression counter value from 2 to 3 and stores a counter value of 3 in the memory.

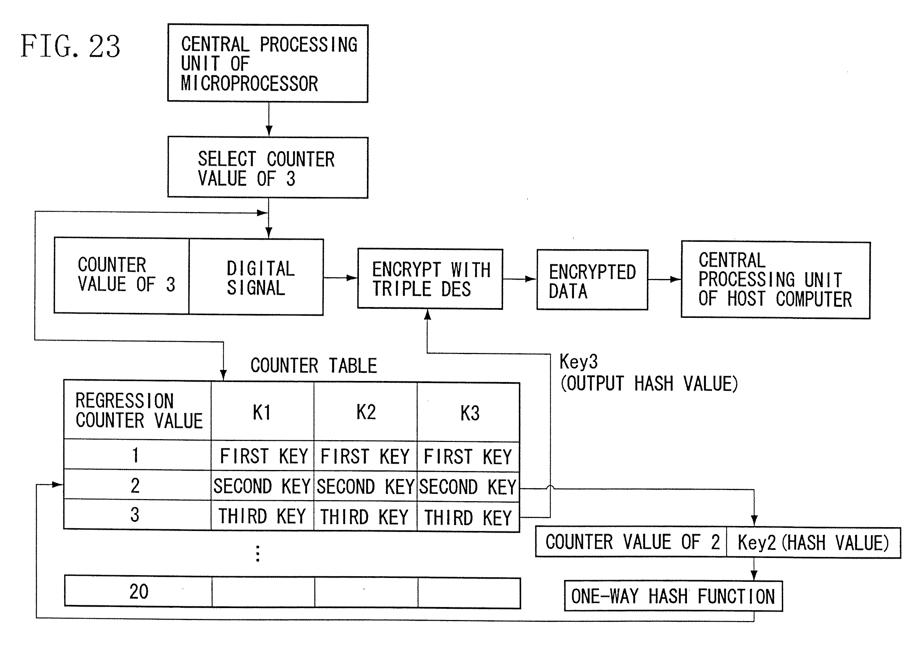

When a data send instruction is received after the third digital signal (card data) is input to the microprocessor 26 from the A/D conversion chip 25 and the digital signal is stored in the memory 36, the central processing unit 35 of the processor 26 selects, as shown in FIG. 23, a regression counter value of 3 from the counter table stored in the memory 36, and attaches a counter value of 3 to the digital signal. The central processing unit 35 of the processor 26 generates an output hash value which is obtained by hashing the second key (Key2, a hash value) associated with a counter value of 2 and the counter value of 2 using the one-way hash function, and uses the output hash value as a third key (Key3) associated with a counter value of 3 (the key generation means). The output hash value serving as the third key (Key3) is written to key storage areas (K1, K2, and K3) associated with a counter value of 3 in the counter table. Note that, in the counter table in FIG. 12, 4th to 20th keys associated with regression counter values of 4 to 20, respectively, are not generated.

The central processing unit 35 of the microprocessor 26 extracts third keys associated with a counter value of 3 from the counter table, encrypts the digital signal (including a counter value of 3) with Triple DES (3-Key Triple DES) using the third keys and thereby obtains encrypted data (encryption means), and sends the encrypted data to the computer 13. After the central processing unit 35 of the processor 26 sends the encrypted data to the computer 13, the central processing unit 35 changes the regression counter value from 3 to 4 and stores a counter value of 4 in the memory 36, and deletes the third digital signal (card data) from the memory 36.

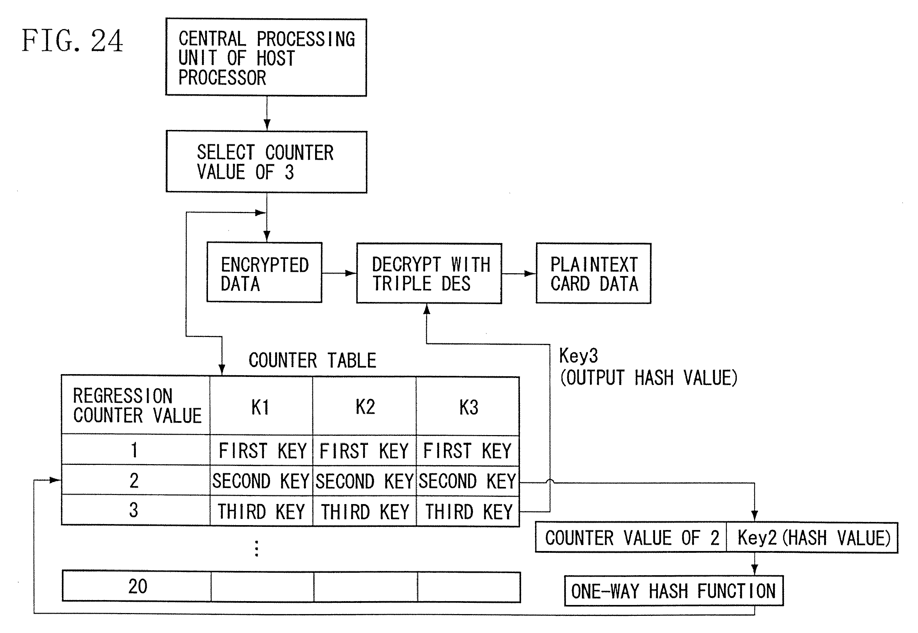

The central processing unit of the host computer 13 having received the third encrypted data selects, as shown in FIG. 24, a regression counter value of 3 from the counter table stored in the memory. The central processing unit of the computer 13 generates an output hash value which is obtained by hashing the second key (Key2) associated with a counter value of 2 and the counter value of 2 using the one-way hash function, and uses the output hash value as a third key (Key3) associated with a counter value of 3 (the key generation means). The third key (Key3) generated by the central processing unit of the computer 13 is the same as that generated by the central processing unit 35 of the microprocessor 26. The output hash value serving as the third key (Key3) is written to key storage areas (K1, K2, and K3) associated with a counter value of 3 in the counter table. Note that, in the counter table in FIG. 13, 4th to 20th keys associated with regression counter values of 4 to 20, respectively, are not generated. The central processing unit of the computer 13 extracts third keys associated with a counter value of 3 from the counter table, and decrypts the encrypted data with Triple DES (3-Key Triple DES) using the third keys and thereby obtains a digital signal (plaintext card data). After the central processing unit of the computer 13 decrypts the encrypted data, the central processing unit of the computer 13 changes the regression counter value from 3 to 4 and stores a counter value of 4 in the memory.

As such, the central processing unit of the host computer 13 and the central processing unit 35 of the microprocessor 26 generate, in synchronization with each other, second to nth keys using regression counter values of 1 to 20 in turn and using a one-way hash function. When the regression counter value exceeds 20, the central processing unit of the computer 13 and the central processing unit 35 of the processor 26 use a counter value of 1 again to generate 21st to 40th keys in turn. When the central processing unit of the computer 13 and the central processing unit 35 of the processor 26 generate a 21st key, the central processing unit of the computer 13 and the central processing unit 35 rewrite first keys stored in corresponding key storage areas to the 21st keys. When the central processing unit of the computer 13 and the central processing unit 35 generate a 22nd key, the central processing unit of the computer 13 and the central processing unit 35 rewrite second keys stored in corresponding key storage areas to the 22nd keys.

In the magnetic card reading system 10, the central processing unit of the host computer 13 and the central processing unit 35 of the microprocessor 26 can determine mutual validity by executing the mutual authentication means. Thus, even when a fake computer is connected to the magnetic head 19 or when a fake magnetic head is connected to the computer 13, such a fake can be detected. In the system 10, a third party cannot access the system 10 using a fake computer or a fake magnetic head and thus stealing of card data of the magnetic card 29, a hash function, and a key can be prevented.

In the system 10, after the central processing unit of the computer 13 and the central processing unit 35 of the processor 26 determine that authentication results obtained by the authentication means are valid, the central processing unit 35 of the processor 26 executes the data encryption means and the data sending means, and the central processing unit of the computer 13 executes the decryption means. Thus, compared with the case in which such means are executed without performing authentication, stealing of card data stored in the magnetic card 29 can be reliably prevented, enabling to reliably prevent unauthorized copying of the magnetic card 29 by a third party or "spoofing" by a third party.

In the system 10, since the central processing unit of the host computer 13 and the central processing unit 35 of the microprocessor 26 individually generate second to nth keys, there is no need to send a key from the computer 13 to the processor 26, enabling to prevent unauthorized acquisition of a key in the process of sending the key. In the system 10, the central processing unit 35 of the processor 26 performs encryption, always using a different key, and the central processing unit of the computer 13 performs decryption, always using a different key. Thus, even if a key is obtained by a third party, the third party cannot decrypt card data stored in the magnetic card 29.
In addition, since a hash value is used for each of second to nth keys, even if a key is illegally obtained by a third party, the third party cannot crack the key, enabling to reliably prevent the use of the key by the third party.

In the system 10, the central processing unit of the host computer 13 and the central processing unit 35 of the microprocessor 26 generate, in synchronization with each other, second to nth keys in turn, using identical and finite regression counter values. Thus, a key generated by the computer 13 and a key generated by the processor 26 can match each other, enabling to prevent the inability to decrypt encrypted data due to a mismatch between generated keys. In addition, since an output hash value which is obtained by hashing a regression counter value is included in an output hash value which serves as one of second to nth keys, even if a third party illegally accesses the system 10, the third party cannot crack the hashed regression counter value and thus cannot determine which counter value is being used for synchronization between the central processing unit of the computer 13 and the central processing unit 35 of the processor 26.

When the central processing unit of the host computer 13 and the central processing unit 35 of the microprocessor 26 go out of sync while the system 10 is running, a key generated by the central processing unit of the computer 13 is different from that generated by the central processing unit 35 of the processor 26, and thus, the central processing unit of the computer 13 cannot decrypt encrypted data which is sent from the central processing unit 35. In this case, the central processing unit of the computer 13 determines that decryption with the generated key is impossible, and thus, informs of "undecryptable" ("undecryptable" information) and requests for resynchronization (resynchronization request). The central processing unit of the computer 13 encrypts "undecryptable" information and a resynchronization request with Triple DES using information transmission and reception keys stored in the memory, and sends the encrypted "undecryptable" information and resynchronization request to the processor 26. The central processing unit of the computer 13 and the central processing unit 35 of the processor 26 having received the resynchronization request perform external authentication and internal authentication to determine their validity (see FIGS. 6 and 7) (the mutual authentication means). If the central processing unit of the computer 13 and the central processing unit 35 of the processor 26 determine that the results of mutual authentication obtained by the mutual authentication are valid, then the central processing unit of the computer 13 and the central processing unit 35 bring their respective regression counter values back to 1 (initial value) and start synchronization again. When the central processing unit of the computer 13 and the central processing unit 35 of the processor 26 bring their respective counter values back to 1, the central processing unit of the computer 13 and the central processing unit 35 perform encryption and decryption using first keys again.

In the system 10, even if a mismatch occurs between generated keys, the host computer 13 and the microprocessor 26 can bring their respective regression counter values back to 1 and synchronize with each other again. Thus, a key generated by the computer 13 and a key generated by the processor 26 can match each other again, enabling to prevent the inability to decrypt card data due to a mismatch between generated keys. Note that, in the case where the system 10 continuously runs and thus mutual authentication is performed on a daily, weekly, or monthly basis, when the central processing unit of the computer 13 and the central processing unit 35 of the processor 26 determine that the results of mutual authentication obtained by the mutual authentication are valid, the central processing unit of the computer 13 and the central processing unit 35 bring their respective regression counter values back to 1 and start synchronization again. Subsequent procedural steps are the same as those described based on FIGS. 19 to 24.

The host computer 13 can stop the use of a hash function which is currently used, select a new hash function from among hash functions stored in the memory, and use the hash function. A change of a hash function may be performed each time the system 10 is activated, or may be performed on a daily, weekly, or monthly basis, or may be performed when, after synchronization is lost, synchronization is achieved again. When the computer 13 uses a new hash function, the computer 13 instructs the microprocessor 26 to rewrite an existing hash function (function change instruction). The central processing unit of the computer 13 encrypts a function change instruction and a new hash function with Triple DES using information transmission and reception keys stored in the memory, and sends the encrypted function change instruction and hash function to the processor 26.

When the central processing unit 35 of the microprocessor 26 receives the function change instruction and the hash function, the central processing unit 35 decrypts the encrypted function change instruction and hash function with Triple DES using information transmission and reception keys stored in the memory 36. The central processing unit 35 of the processor 26 changes an existing hash function stored in the memory 36 to the new decrypted hash function, and thereafter, notifies the computer 13 of the completion of the change (change completion notification). The central processing unit 35 encrypts change completion notification with Triple DES using information transmission and reception keys stored in the memory 36, and sends the encrypted change completion notification to the computer 13. In the system 10, since a change of a hash function is performed in such a manner that a function change instruction and a hash function are encrypted, a hash function to be used is not obtained by a third party, enabling to prevent a hash function from being cracked by a third party.

The host computer 13 can stop the use of an encryption algorithm which is currently used, select a new algorithm from among encryption algorithms stored in the memory, and use the algorithm. A change of an encryption algorithm may be performed each time the system 10 is activated, or may be performed on a daily, weekly, or monthly basis, or may be performed when, after synchronization is lost, synchronization is achieved again. When the computer 13 uses a new encryption algorithm, the computer 13 instructs the microprocessor 26 to rewrite an existing algorithm (function change instruction). The central processing unit of the computer 13 encrypts a function change instruction and a new encryption algorithm with Triple DES using information transmission and reception keys stored in the memory, and sends the encrypted function change instruction and algorithm to the processor 26.

When the central processing unit 35 of the microprocessor 26 receives the function change instruction and the encryption algorithm, the central processing unit 35 decrypts the encrypted function change instruction and algorithm with Triple DES using information transmission and reception keys stored in the memory 36. The central processing unit 35 of the processor 26 changes an existing algorithm stored in the memory 36 to the new decrypted algorithm, and thereafter, notifies the computer 13 of the completion of the change (change completion notification). The central processing unit 35 encrypts change completion notification with Triple DES using information transmission and reception keys stored in the memory 36, and sends the encrypted change completion notification to the computer 13. In the system 10, since a change of an algorithm is performed in such a manner that a function change instruction and an encryption algorithm are encrypted, an algorithm to be used is not obtained by a third party.

For a magnetic card reader in the system 10, a handy manual card reader having mounted thereon the magnetic head 19 can also be used in addition to a card reader of an insertion motor-driven type. In addition, a magnetic card reader can be connected to a POS system. When a magnetic card reader is connected to a POS system, there is no need to install a controller in the card reader, and a connection to the external server 11 is established by a computer included in the POS system. Firmware or an encryption algorithm is downloaded to a memory of the computer of the POS system from the external server and is temporarily stored in the memory, and is thereafter, output to the microprocessor 26 of the magnetic head of the card reader.

## Claims

1. A magnetic head that reads various data from a magnetic card having the data stored therein by using a magnetic material, the magnetic head comprising:
a core having a coil that converts data stored in the magnetic card to an analog signal;
an A/D conversion chip that is connected to the core and converts the analog signal to a digital signal; and
a digital IC connected to the A/D conversion chip,
wherein the digital IC has firmware storage means for storing firmware when the firmware is downloaded to the magnetic head from an external server, the firmware controlling computation and storage functions of the digital IC and controlling external hardware.

2. The magnetic head according to claim 1, wherein the firmware includes data reading control that allows the digital IC to read various data in the magnetic card, supporting various formats of the magnetic card, and the digital IC has format-support reading means for reading various data from the magnetic card, supporting various formats of the magnetic card.

3. The magnetic head according to claim 1 or 2, wherein the firmware includes data encryption control that allows the digital IC to encrypt the digital signal based on a predetermined encryption algorithm, and the digital IC has data encryption means for encrypting the digital signal based on a predetermined encryption algorithm.

4. The magnetic head according to any one of claims 1 to 3, wherein the digital IC has firmware update means for rewriting, when upgraded firmware is downloaded to the magnetic head from the external server, a pre-upgrade version of firmware to the post-upgrade version of firmware.

5. The magnetic head according to any one of claims 1 to 4, wherein the external server encrypts the firmware using a key stored therein and downloads the encrypted firmware to the magnetic head, and the digital IC decrypts the encrypted firmware using a key stored therein and stores the decrypted firmware.

6. The magnetic head according to any one of claims 1 to 5, wherein after the digital IC and the external server perform mutual authentication, where authentication is performed therebetween, and determine that results of mutual authentication obtained by the mutual authentication are valid, the external server downloads the firmware to the magnetic head, and the digital IC stores the firmware downloaded from the external server.

7. The magnetic head according to any one of claims 1 to 6, wherein the digital IC has algorithm storage means for storing, when various encryption algorithms that encrypt the digital signal are downloaded to the magnetic head from the external server, the encryption algorithms.

8. The magnetic head according to claim 7, wherein the digital IC has algorithm update means for rewriting, when a new encryption algorithm is downloaded to the magnetic head from the external server, an already stored encryption algorithm to the new encryption algorithm.

9. The magnetic head according to claim 7 or 8, wherein the external server encrypts the encryption algorithm using a key stored therein and downloads the encrypted encryption algorithm to the magnetic head, and the digital IC decrypts the encrypted encryption algorithm using a key stored therein and stores the decrypted encryption algorithm.

10. The magnetic head according to any one of claims 7 to 9, wherein after the digital IC and the external server perform mutual authentication, where authentication is performed therebetween, and determine that results of mutual authentication obtained by the mutual authentication are valid, the external server downloads the encryption algorithm to the magnetic head, and the digital IC stores the encryption algorithm downloaded from the external server.

11. The magnetic head according to any one of claims 1 to 10, wherein the magnetic head has a housing that covers an outer surface thereof, and the core, the A/D conversion chip, and the digital IC are contained in the housing.

12. The magnetic head according to any one of claims 1 to 11, wherein the A/D conversion chip and the digital IC are fixed in the housing with a solid material filled in the housing.
